# EUROPEAN PATENT SPECIFICATION

(11) **EP 2 805 468 B1**
(45) Date of publication and mention of the grant of the patent: **21.11.2018**
(21) Application number: 13704642.1
(22) Date of filing: 15.01.2013
(51) Int. Cl.: H04L 29/06

(54) **METHOD AND SYSTEM FOR TRANSITIONS OF BROADCAST DASH SERVICE RECEPTIONS BETWEEN UNICAST AND BROADCAST**
VERFAHREN UND SYSTEM FÜR ÜBERGÄNGE VON RUNDFUNK-DASH-DIENSTEMPFÄNGEN ZWISCHEN UNICAST UND BROADCAST
PROCÉDÉ ET SYSTÈME POUR DES TRANSITIONS DE RÉCEPTIONS DE SERVICE DE TABLEAU DE RADIODIFFUSION ENTRE LA DIFFUSION INDIVIDUELLE ET LA DIFFUSION GÉNÉRALE

(30) Priority: 16.01.2012 US 201261587103 P; 13.04.2012 US 201261623965 P; 14.05.2012 US 201261646873 P; 29.10.2012 US 201261719936 P; 14.01.2013 US 201313741367
(43) Date of publication of application: 26.11.2014
(60) Divisional application: 18193298.9
(73) Proprietor: Qualcomm Incorporated, San Diego, CA 92121-1714 (US)
(72) Inventor: PAZOS, Carlos M.D., San Diego, California 92121 (US); STOCKHAMMER, Thomas, San Diego, California 92121 (US); CHERIAN, George, San Diego, California 92121 (US); GHOLMIEH, Ralph Akram, San Diego, California 92121 (US); NAIK, Nagaraju, San Diego, California 92121 (US); WANG, Jun, San Diego, California 92121 (US); LO, Charles Nung, San Diego, California 92121 (US)
(74) Representative: Dunlop, Hugh Christopher
(86) International application number: PCT/US2013/021599
(87) International publication number: WO 2013/109551

(56) References cited:
- WO-A1-2011/150794
- WO-A1-2012/138909
- YASUAKI TOKUMO ET AL: "Response to CfPs on MPEG Media Transport (MMT)", 95. MPEG MEETING; 24-1-2011 - 28-1-2011; DAEGU; (MOTION PICTURE EXPERT GROUP OR ISO/IEC JTC1/SC29/WG11),, no. m19194, 19 January 2011 (2011-01-19), XP030047761,
- GABIN F ET AL: "3GPP Mobile Multimedia Streaming Standards [Standards in a Nutshell]", IEEE SIGNAL PROCESSING MAGAZINE, IEEE SERVICE CENTER, PISCATAWAY, NJ, US, vol. 27, no. 6, 1 November 2010 (2010-11-01), pages 134-138, XP011317684, ISSN: 1053-5888

## Description

### BACKGROUND

### Field

Aspects of the present disclosure relate generally to wireless communication systems, and more particularly, to managing Dynamic Adaptive Streaming over HTTP (DASH) service.

### Background

Wireless communication networks are widely deployed to provide various communication services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

A wireless communication network may include a number of base stations that can support communication for a number of user equipments (UEs), also referred to
as mobile entities. A UE may communicate with a base station via a downlink and an uplink. The downlink (or forward link) refers to the communication link from the base station to the UE, and the uplink (or reverse link) refers to the communication link from the UE to the base station. As used herein, a "base station" means an eNode B (eNB), a Node B, a Home Node B, or similar network component of a wireless communications system.

The 3rd Generation Partnership Project (3GPP) Long Term Evolution (LTE) represents a major advance in cellular technology as an evolution of Global System for Mobile communications (GSM) and Universal Mobile Telecommunications System (UMTS). The LTE physical layer (PHY) provides a highly efficient way to convey both data and control information between base stations, such as an evolved Node Bs (eNBs), and mobile entities, such as UEs. In prior applications, a method for facilitating high bandwidth communication for multimedia has been single frequency network (SFN) operation. SFNs utilize radio transmitters, such as, for example, eNBs, to communicate with subscriber UEs. In unicast operation, each eNB is controlled so as to transmit signals carrying information directed to one or more particular subscriber UEs. The specificity of unicast signaling enables person-to-person services such as, for example, voice calling, text messaging, or video calling.

YASUAKITOKUMO ET AL: "Response to CfPs on MPEG Media Transport (MMT)", 95. MPEG MEETING; 24- 1-2011 - 28- 1-2011; DAEGU; (MOTION PICTURE EXPERT GROUP OR ISO/IEC JTC1/SC29/WG11), no. m 19194, 19 January 2011 (2011-01-19), XP030047761, describes a method to improve an efficiency of a delivery and enable seamless transition between different networks. It
proposes to support both multicast-based transport and unicast-based transport within one MPD and introduces a mechanism for timeline mapping between multicast media segments and unicast media segments.
3GPP Mobile Multimedia Streaming Standards describes an MPD media session as a number of segments, including their timing information and relationship to other segments. The documents also describes the MPD consists of three major parameters: periods, representations, and segments.

Dynamic Adaptive Streaming over HTTP (DASH) enables services that deliver continuous (streaming) media content over Hypertext Transfer Protocol (HTTP), which is a unicast transport protocol. The simultaneous unicast and broadcast delivery of DASH content and the handling of transitions between unicast and broadcast delivery, and vice versa is not fully defined. Latencies associated with broadcast delivery also provide further challenges to such transitions. Information on the broadcast availability adjustment (e.g., delay or advance in availability) is dependent on the network deployment and should be made available to the mobile entity to achieve seamless transitions between unicast and broadcast delivery. Information relating to the delivery of DASH segments via broadcast may need to be delivered to DASH clients, wherein such information may include: geographical constraints on reception of unicast versions of the content; information on which representation of the content is available via broadcast in a given area, information to enable discovery of appropriate broadcast transport sessions carrying different representations of the same content; and information to support on demand DASH services to off-load unicast DASH traffic.

Accordingly, techniques for conveying parameters supporting broadcast delivery without impacting the core unicast features of DASH are also needed.

### SUMMARY

The invention relates to a method operable by a mobile entity in a wireless system, an apparatus and a computer program product as set forth in the claims.

To the accomplishment of the foregoing and related ends, the one or more embodiments include the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed.

### BRIEF DESCRIPTION OF THE DRAWINGS

FIG. 1 is a block diagram conceptually illustrating an example of a telecommunications system.
FIG. 2 is a block diagram conceptually illustrating an example of a down link frame structure in a telecommunications system.
FIG. 3 is a block diagram conceptually illustrating a design of a base station/eNB and a UE configured according to one aspect of the present disclosure.
FIG. 4 is a diagram of a signaling frame illustrating an example of symbol allocation for unicast and multicast signals.
FIG. 5 is a diagram illustrating MBMS over a Single Frequency Network (MBSFN) areas within an MBSFN service area.
FIG. 6 is a block diagram illustrating components of a wireless communication system for providing or supporting MBSFN service.
FIG. 7 illustrates an embodiment of a DASH MPD.
FIG. 8 illustrates an embodiment of a BaseURL in a DASH MPD.
FIG. 9 illustrates an embodiment of a bundle description in the eMBMS USD.
FIG. 10A illustrates an embodiment of a USD for eMBMS.
FIG. 10B illustrates another embodiment of a USD for eMBMS.
FIG. 11 illustrates an embodiment of a deliveryMethod description in the eMBMS USD
FIG. 12 illustrates an embodiment of multiple BaseURLs at the MPD level.
FIG. 13 illustrates an embodiment of a DASH segment availability timeline.
FIG. 14 shows an example of implicit consideration on a protection period.
FIG. 15 shows an example timeline for a UC-BC transition.
FIG. 16 shows examples of different playback delays for unicast fetched segments.
FIG. 17 shows examples of different playback delays for broadcast fetched segments.
FIG. 18 shows an example timeline for a BC-UC transition.
FIG. 19 illustrates segment playback based on broadcast vs. unicast fetched segments.
FIG. 20 illustrates multiple broadcast transmissions for a single service.
FIG. 21 illustrates conveying parameters via XML strings for multiple broadcast transmissions for a single service.
FIG. 22A illustrates an example methodology executable by a mobile entity.
FIGS. 22B-D show further aspects of the methodology of FIG. 22A.
FIG. 23 shows an embodiment of an apparatus, in accordance with the methodology of FIGS. 22A-D.
FIG. 24 illustrates another example methodology executable by a mobile entity in a wireless system .
FIG. 25 shows an embodiment of an apparatus, in accordance with the methodology of FIG. 24.
FIG. 26 illustrates an example methodology executable by a network entity in a wireless system.
FIG. 27 shows an embodiment of an apparatus, in accordance with the methodology of FIG. 26.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

The techniques described herein may be used for various wireless communication networks such as CDMA, TDMA, FDMA, OFDMA, SC-FDMA and other networks. The terms "network" and "system" are often used interchangeably. A CDMA network may implement a radio technology such as Universal Terrestrial Radio Access (UTRA), CDMA2000, etc. UTRA includes Wideband CDMA (WCDMA) and other variants of CDMA. CDMA2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the wireless networks and radio technologies mentioned above as well as other wireless networks and radio technologies. For clarity, certain aspects of the techniques are described below for LTE, and LTE terminology is used in much of the description below.

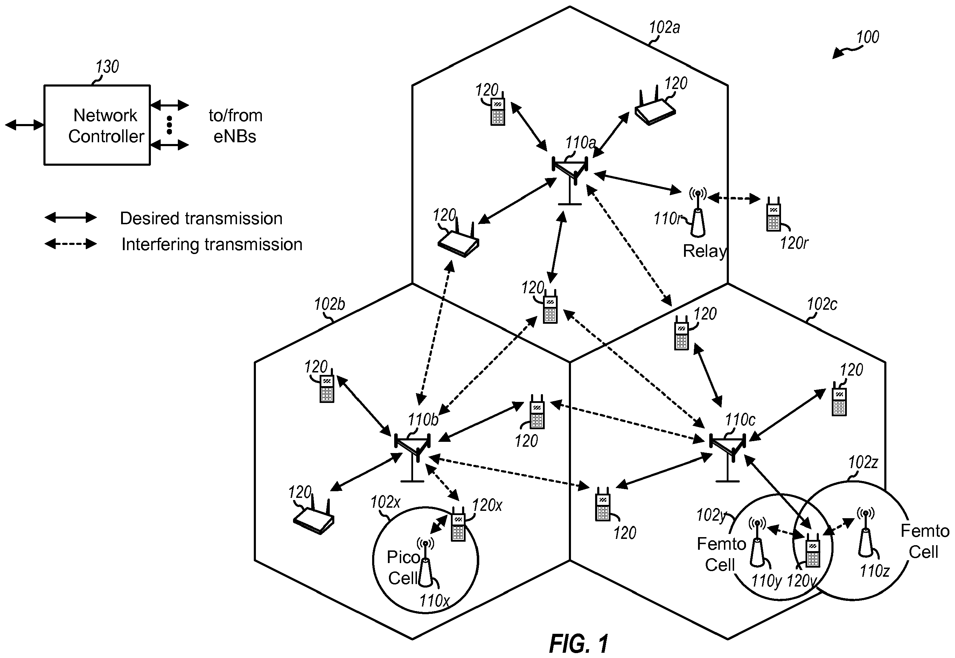

FIG. 1 shows a wireless communication network 100, which may be an LTE network. The wireless network 100 may include a number of eNBs 110 and other network entities. An eNB may be a station that communicates with the UEs and may also be referred to as a base station, a Node B, an access point, or other term. Each eNB 110a, 110b, 110c may provide communication coverage for a particular geographic area. In 3GPP, the term "cell" can refer to a coverage area of an eNB and/or an eNB subsystem serving this coverage area, depending on the context in which the term is used.

An eNB may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a Closed Subscriber Group (CSG), UEs for users in the home, etc.). An eNB for a macro cell may be referred to as a macro eNB. An eNB for a pico cell may be referred to as a pico eNB. An eNB for a femto cell may be referred to as a femto eNB or a home eNB (HNB). In the example shown in FIG. 1, the eNBs 110a, 110b and 110c may be macro eNBs for the macro cells 102a, 102b and 102c, respectively. The eNB 110x may be a pico eNB for a pico cell 102x, serving a UE 120x. The eNBs 110y and 110z may be femto eNBs for the femto cells 102y and 102z, respectively. An eNB may support one or multiple (e.g., three) cells.

The wireless network 100 may also include relay stations 110r. A relay station is a station that receives a transmission of data and/or other information from an upstream station (e.g., an eNB or a UE) and sends a transmission of the data and/or other information to a downstream station (e.g., a UE or an eNB). A relay station may also be a UE that relays transmissions for other UEs. In the example shown in FIG. 1, a relay station 110r may communicate with the eNB 110a and a UE 120r in order to facilitate communication between the eNB 110a and the UE 120r. A relay station may also be referred to as a relay eNB, a relay, etc.

The wireless network 100 may be a heterogeneous network that includes eNBs of different types, e.g., macro eNBs, pico eNBs, femto eNBs, relays, etc. These different types of eNBs may have different transmit power levels, different coverage areas, and different impact on interference in the wireless network 100. For example, macro eNBs may have a high transmit power level (e.g., 20 Watts) whereas pico eNBs, femto eNBs and relays may have a lower transmit power level (e.g., 1 Watt).

The wireless network 100 may support synchronous or asynchronous operation. For synchronous operation, the eNBs may have similar frame timing, and transmissions from different eNBs may be approximately aligned in time. For asynchronous operation, the eNBs may have different frame timing, and transmissions from different eNBs may not be aligned in time. The techniques described herein may be used for both synchronous and asynchronous operation.

A network controller 130 may couple to a set of eNBs and provide coordination and control for these eNBs. The network controller 130 may communicate with the eNBs 110 via a backhaul. The eNBs 110 may also communicate with one another, e.g., directly or indirectly via wireless or wireline backhaul.

The UEs 120 may be dispersed throughout the wireless network 100, and each UE may be stationary or mobile. A UE may also be referred to as a terminal, a mobile station, a subscriber unit, a station, etc. A UE may be a cellular phone, a personal digital assistant (PDA), a wireless modem, a wireless communication device, a handheld device, a laptop computer, a cordless phone, a wireless local loop (WLL) station, or other mobile entities. A UE may be able to communicate with macro eNBs, pico eNBs, femto eNBs, relays, or other network entities. In FIG. 1, a solid line with double arrows indicates desired transmissions between a UE and a serving eNB, which is an eNB designated to serve the UE on the downlink and/or uplink. A dashed line with double arrows indicates interfering transmissions between a UE and an eNB.

LTE utilizes orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, K may be equal to 128, 256, 512, 1024 or 2048 for system bandwidth of 1.25, 2.5, 5, 10 or 20 megahertz (MHz), respectively. The system bandwidth may also be partitioned into subbands. For example, a subband may cover 1.08 MHz, and there may be 1, 2, 4, 8 or 16 subbands for system bandwidth of 1.25, 2.5, 5, 10 or 20 MHz, respectively.

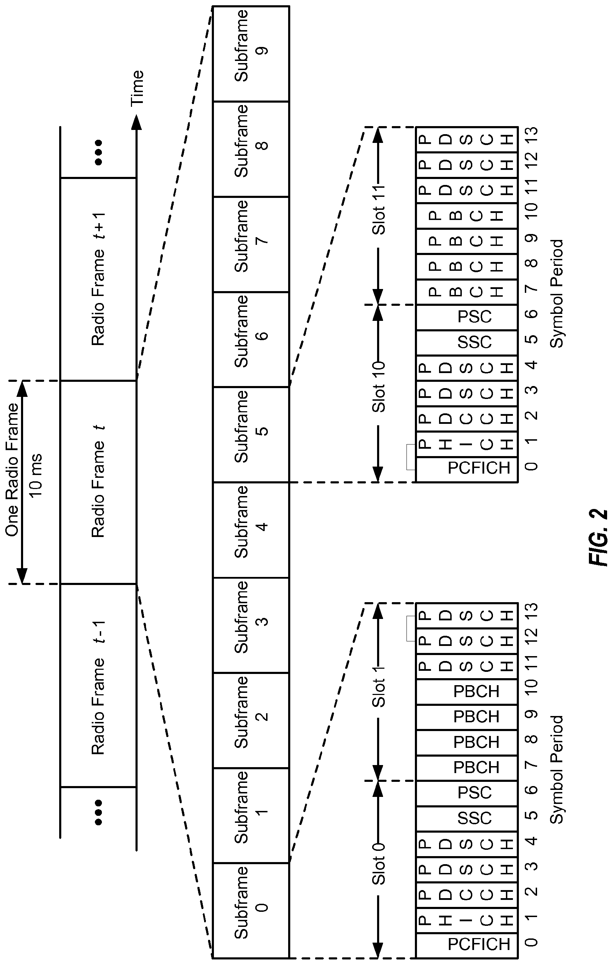

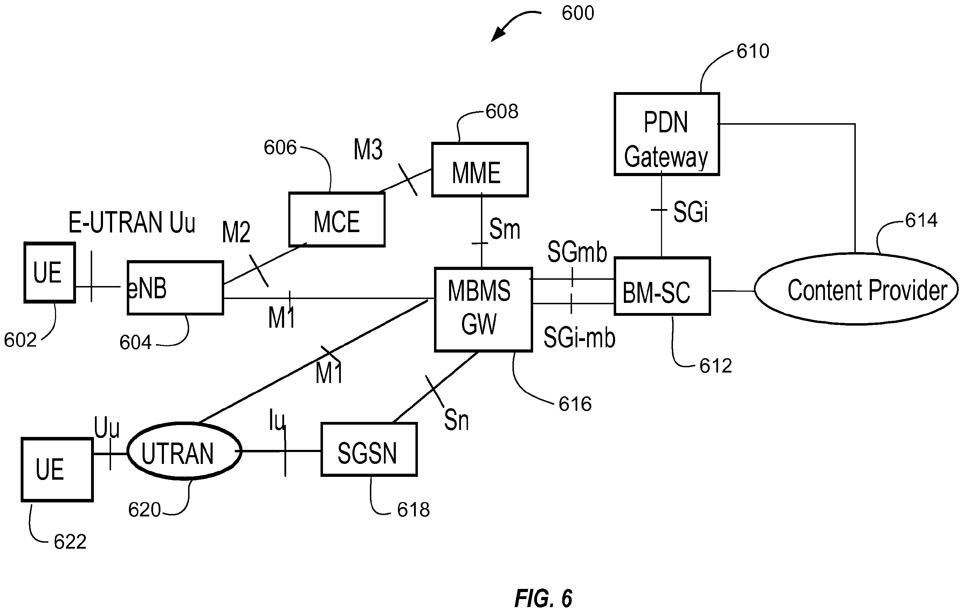

FIG. 2 shows a down link frame structure used in LTE. The transmission timeline for the downlink may be partitioned into units of radio frames. Each radio frame may have a predetermined duration (e.g., 10 milliseconds (ms)) and may be partitioned into 10 subframes with indices of 0 through 9. Each subframe may include two slots. Each radio frame may thus include 20 slots with indices of 0 through 19. Each slot may include L symbol periods, e.g., 7 symbol periods for a normal cyclic prefix (CP), as shown in FIG. 2, or 6 symbol periods for an extended cyclic prefix. The normal CP and extended CP may be referred to herein as different CP types. The 2L symbol periods in each subframe may be assigned indices of 0 through 2L-1. The available time frequency resources may be partitioned into resource blocks. Each resource block may cover N subcarriers (e.g., 12 subcarriers) in one slot.

In LTE, an eNB may send a primary synchronization signal (PSS) and a secondary synchronization signal (SSS) for each cell in the eNB. The primary and secondary synchronization signals may be sent in symbol periods 6 and 5, respectively, in each of subframes 0 and 5 of each radio frame with the normal cyclic prefix, as shown in FIG. 2. The synchronization signals may be used by UEs for cell detection and acquisition. The eNB may send a Physical Broadcast Channel (PBCH) in symbol periods 0 to 3 in slot 1 of subframe 0. The PBCH may carry certain system information.

The eNB may send a Physical Control Format Indicator Channel (PCFICH) in only a portion of the first symbol period of each subframe, although depicted in the entire first symbol period in FIG. 2. The PCFICH may convey the number of symbol periods (M) used for control channels, where M may be equal to 1, 2 or 3 and may change from subframe to subframe. M may also be equal to 4 for a small system bandwidth, e.g., with less than 10 resource blocks. In the example shown in FIG. 2, M=3. The eNB may send a Physical HARQ Indicator Channel (PHICH) and a Physical Downlink Control Channel (PDCCH) in the first M symbol periods of each subframe (M=3 in FIG. 2). The PHICH may carry information to support hybrid automatic retransmission (HARQ). The PDCCH may carry information on resource allocation for UEs and control information for downlink channels. Although not shown in the first symbol period in FIG. 2, it is understood that the PDCCH and PHICH are also included in the first symbol period. Similarly, the PHICH and PDCCH are also both in the second and third symbol periods, although not shown that way in FIG. 2. The eNB may send a Physical Downlink Shared Channel (PDSCH) in the remaining symbol periods of each subframe. The PDSCH may carry data for UEs scheduled for data transmission on the downlink. The various signals and channels in LTE are described in 3GPP TS 36.211, entitled "Evolved Universal Terrestrial Radio Access (E-UTRA); Physical Channels and Modulation," which is publicly available.

The eNB may send the PSS, SSS and PBCH in the center 1.08 MHz of the system bandwidth used by the eNB. The eNB may send the PCFICH and PHICH across the entire system bandwidth in each symbol period in which these channels are sent. The eNB may send the PDCCH to groups of UEs in certain portions of the system bandwidth. The eNB may send the PDSCH to specific UEs in specific portions of the system bandwidth. The eNB may send the PSS, SSS, PBCH, PCFICH and PHICH in a broadcast manner to all UEs, may send the PDCCH in a unicast manner to specific UEs, and may also send the PDSCH in a unicast manner to specific UEs.

A number of resource elements may be available in each symbol period. Each resource element may cover one subcarrier in one symbol period and may be used to send one modulation symbol, which may be a real or complex value. Resource elements not used for a reference signal in each symbol period may be arranged into resource element groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1 and 2. The PDCCH may occupy 9, 18, 32 or 64 REGs, which may be selected from the available REGs, in the first M symbol periods. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. An eNB may send the PDCCH to the UE in any of the combinations that the UE will search.

A UE may be within the coverage of multiple eNBs. One of these eNBs may be selected to serve the UE. The serving eNB may be selected based on various criteria such as received power, path loss, signal-to-noise ratio (SNR), etc.

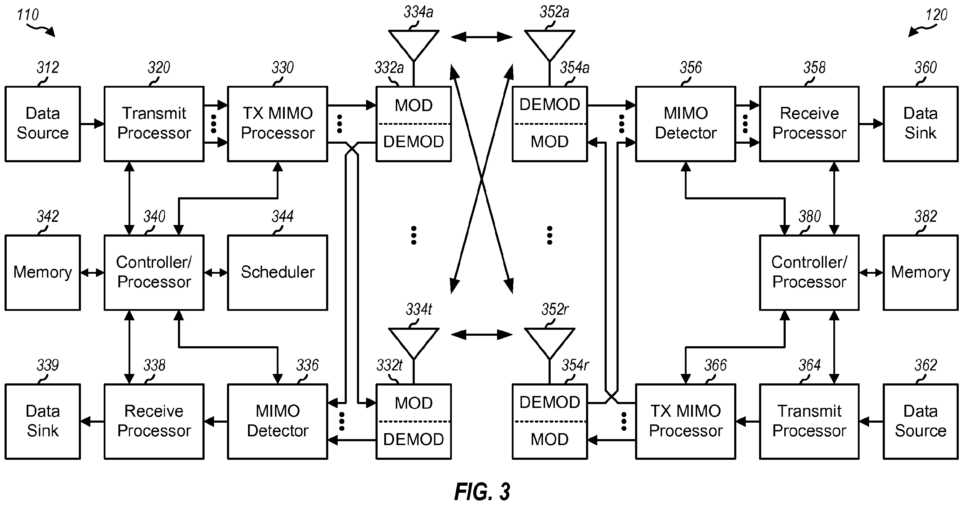

FIG. 3 shows a block diagram of a design of a base station/eNB 110 and a UE 120, which may be one of the base stations/eNBs and one of the UEs in FIG. 1. For a restricted association scenario, the base station 110 may be the macro eNB 110c in FIG. 1, and the UE 120 may be the UE 120y. The base station 110 may also be a base station of some other type. The base station 110 may be equipped with antennas 334a through 334t, and the UE 120 may be equipped with antennas 352a through 352r.

At the base station 110, a transmit processor 320 may receive data from a data source 312 and control information from a controller/processor 340. The control information may be for the PBCH, PCFICH, PHICH, PDCCH, etc. The data may be for the PDSCH, etc. The processor 320 may process (e.g., encode and symbol map) the data and control information to obtain data symbols and control symbols, respectively. The processor 320 may also generate reference symbols, e.g., for the PSS, SSS, and cell-specific reference signal. A transmit (TX) multiple-input multiple-output (MIMO) processor 330 may perform spatial processing (e.g., precoding) on the data symbols, the control symbols, and/or the reference symbols, if applicable, and may provide output symbol streams to the modulators (MODs) 332a through 332t. Each modulator 332 may process a respective output symbol stream (e.g., for OFDM, etc.) to obtain an output sample stream. Each modulator 332 may further process (e.g., convert to analog, amplify, filter, and upconvert) the output sample stream to obtain a downlink signal. Downlink signals from modulators 332a through 332t may be transmitted via the antennas 334a through 334t, respectively.

At the UE 120, the antennas 352a through 352r may receive the downlink signals from the base station 110 and may provide received signals to the demodulators (DEMODs) 354a through 354r, respectively. Each demodulator 354 may condition (e.g., filter, amplify, downconvert, and digitize) a respective received signal to obtain input samples. Each demodulator 354 may further process the input samples (e.g., for OFDM, etc.) to obtain received symbols. A MIMO detector 356 may obtain received symbols from all the demodulators 354a through 354r, perform MIMO detection on the received symbols if applicable, and provide detected symbols. A receive processor 358 may process (e.g., demodulate, deinterleave, and decode) the detected symbols, provide decoded data for the UE 120 to a data sink 360, and provide decoded control information to a controller/processor 380.

On the uplink, at the UE 120, a transmit processor 364 may receive and process data (e.g., for the PUSCH) from a data source 362 and control information (e.g., for the PUCCH) from the controller/processor 380. The processor 364 may also generate reference symbols for a reference signal. The symbols from the transmit processor 364 may be precoded by a TX MIMO processor 366 if applicable, further processed by the modulators 354a through 354r (e.g., for SC-FDM, etc.), and transmitted to the base station 110. At the base station 110, the uplink signals from the UE 120 may be received by the antennas 334, processed by the demodulators 332, detected by a MIMO detector 336 if applicable, and further processed by a receive processor 338 to obtain decoded data and control information sent by the UE 120. The processor 338 may provide the decoded data to a data sink 339 and the decoded control information to the controller/processor 340.

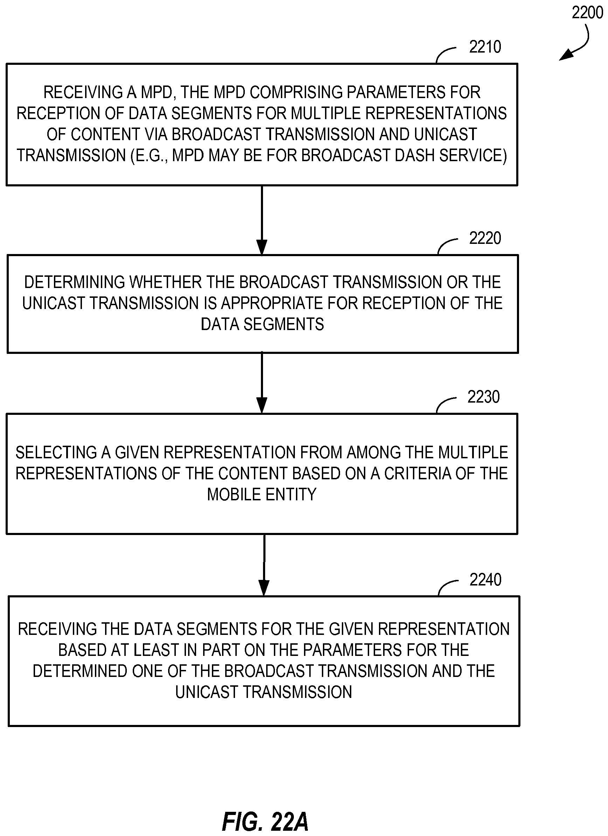

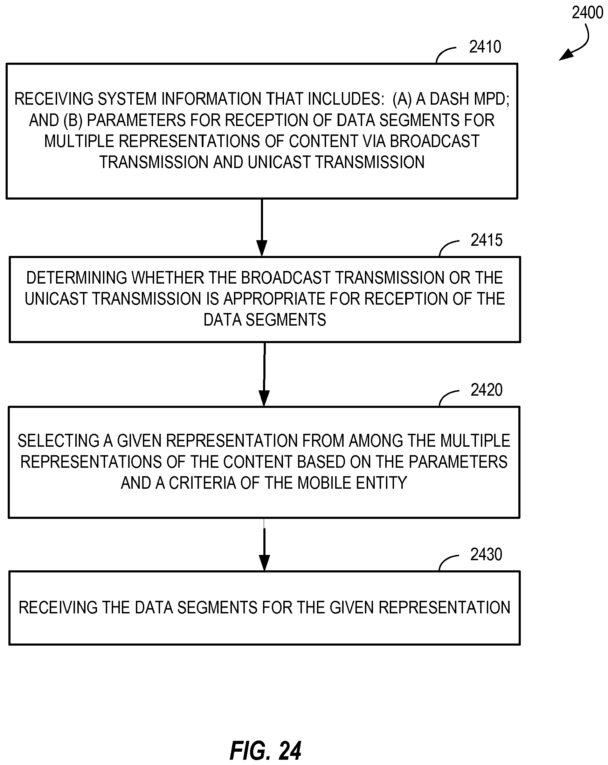

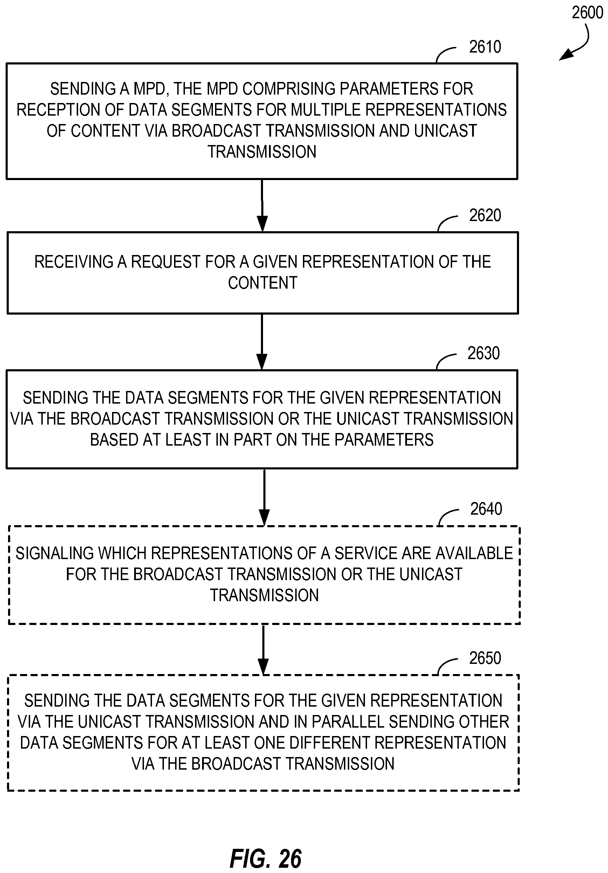

The controllers/processors 340 and 380 may direct the operation at the base station 110 and the UE 120, respectively. The processor 340 and/or other processors and modules at the base station 110 may perform or direct the execution of various processes for the techniques described herein (e.g., see FIG. 26). The processor 380 and/or other processors and modules at the UE 120 may perform or direct the execution of various processes for the techniques described herein (e.g., see FIGS. 22A-D and FIG. 24). The memories 342 and 382 may store data and program codes for the base station 110 and the UE 120, respectively. A scheduler 344 may schedule UEs for data transmission on the downlink and/or uplink.

**eMBMS AND UNICAST SIGNALING IN SINGLE FREQUENCY NETWORKS:** One technique to facilitate high bandwidth communication for multimedia has been single frequency network (SFN) operation. Particularly, Multimedia Broadcast Multicast Service (MBMS) and MBMS for LTE, also known as evolved MBMS (eMBMS) (including, for example, what has recently come to be known as multimedia broadcast single frequency network (MBSFN) in the LTE context), can utilize such SFN operation. SFNs utilize radio transmitters, such as, for example, eNBs, to communicate with subscriber UEs. Groups of eNBs can transmit information in a synchronized manner, so that signals reinforce one another rather than interfere with each other. In the context of eMBMS, the shared content is transmitted from multiple eNB's of a LTE network to multiple UEs. Therefore, within a given eMBMS area, a UE may receive eMBMS signals from any eNB(s) within radio range as part of the eMBMS service area or MBSFN area. However, to decode the eMBMS signal each UE receives Multicast Control Channel (MCCH) information from a serving eNB over a non-eMBMS channel. MCCH information changes from time to time and notification of changes is provided through another non-eMBMS channel, the PDCCH. Therefore, to decode eMBMS signals within a particular eMBMS area, each UE is served MCCH and PDCCH signals by one of the eNBs in the area.

In accordance with aspects of the subject of this disclosure, there is provided a wireless network (e.g., a 3GPP network) having features relating to single carrier optimization for eMBMS. eMBMS provides an efficient way to transmit shared content from an LTE network to multiple mobile entities, such as, for example, UEs.

With respect a physical layer (PHY) of eMBMS for LTE Frequency Division Duplex (FDD), the channel structure may comprise time division multiplex (TDM) resource partitioning between eMBMS and unicast transmissions on mixed carriers, thereby allowing flexible and dynamic spectrum utilization. Currently, a subset of subframes (up to 60%), known as multimedia broadcast single frequency network (MBSFN) subframes, can be reserved for eMBMS transmission. As such current eMBMS design allows at most six out of ten subframes for eMBMS.

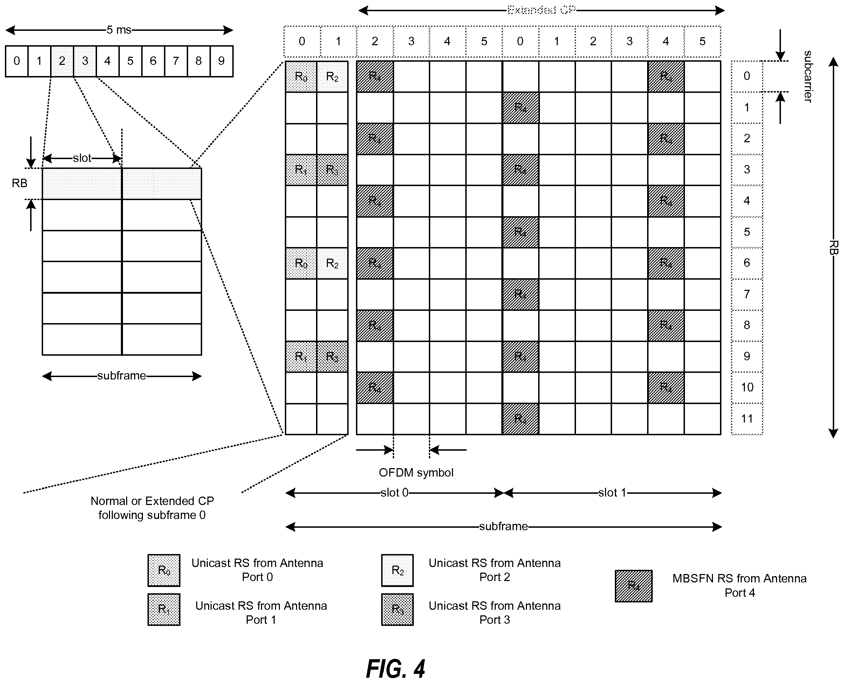

An example of subframe allocation for eMBMS is shown in FIG. 4, which shows an existing allocation of MBSFN reference signals on MBSFN subframes, for a single-carrier case. Components depicted in FIG. 4 correspond to those shown in FIG. 2, with FIG. 4 showing the individual subcarriers within each slot and resource block (RB). In 3GPP LTE, an RB spans 12 subcarriers over a slot duration of 0.5 ms, with each subcarrier having a bandwidth of 15 kHz together spanning 180 kHz per RB. Subframes may be allocated for unicast or eMBMS; for example in a sequence of subframes labeled 0, 1, 2, 3, 4, 5, 6, 7, 8, and 9, subframes 0, 4, 5, and 9 may be excluded from eMBMS in FDD. Also, subframes 0, 1, 5, and 6 may be excluded from eMBMS in time division duplex (TDD). More specifically, subframes 0, 4, 5, and 9 may be used for PSS / SSS / PBCH / paging / System Information Blocks (SIBs) and unicast service. Remaining subframes in the sequence, e.g., subframes 1, 2, 3, 6, 7, and 8 may be configured as eMBMS subframes.

With continued reference to FIG. 4, within each eMBMS subframe, the first 1 or 2 symbols may be used for unicast reference symbols (RSs) and control signaling. A CP length of the first 1 or 2 symbols may follow that of subframe 0. A transmission gap may occur between the first 1 or 2 symbols and the eMBMS symbols if the CP lengths are different. In related aspects, the overall eMBMS bandwidth utilization may be 42.5% considering RS overhead (e.g., 6 eMBMS subframes and 2 control symbols within each eMBMS subframe). Known techniques for providing MBSFN RSs and unicast RSs typically involve allocating the MBSFN RSs on MBSFN subframes (as shown in FIG. 4), and separately allocating unicast RSs on non-MBSFN subframes. More specifically, as FIG. 4 shows, the extended CP of the MBSFN subframe includes MBSFN RSs but not unicast RSs. The present technology is not limited to the particular frame allocation scheme illustrated by FIGS. 2 and 4, which are presented by way of example, and not by way of limitation. A multicast session or multicast broadcast as used herein may use any suitable frame allocation scheme.

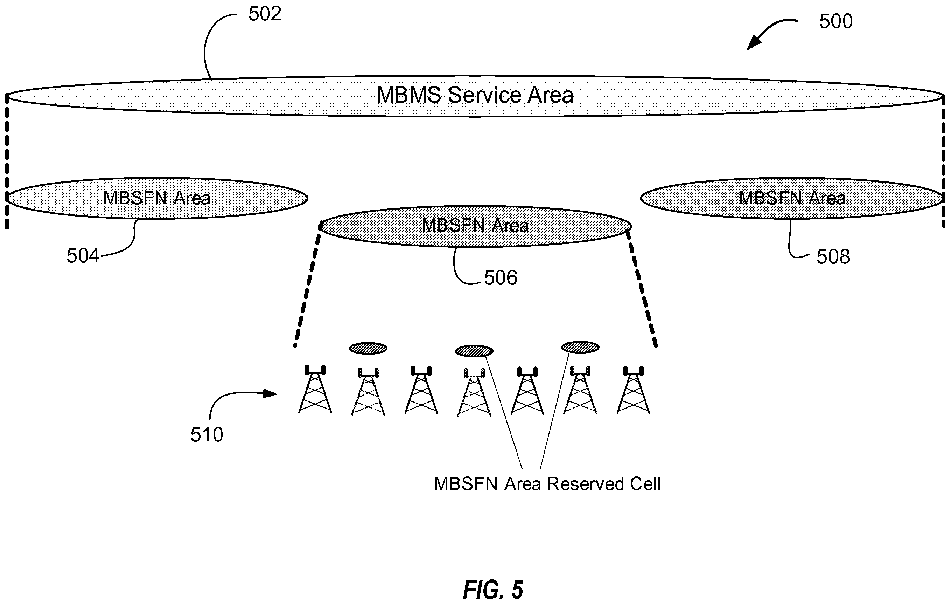

**eMBMS SERVICE AREAS:** FIG. 5 illustrates a system 500 including an MBMS service area 502 encompassing multiple MBSFN areas 504, 506, 508, which themselves include multiple cells or base stations 510. As used herein, an "MBMS service area" refers to a group of wireless transmission cells where a certain MBMS service is available. For example, a particular sports or other program may be broadcast by base stations within the MBMS service area at a particular time. The area where the particular program is broadcast defines the MBMS service area. The MBMS service area may be made up of one or more "MBSFN areas" as shown at 504, 506 and 508. As used herein, an MBSFN area refers to a group of cells (e.g., cells 510) currently broadcasting a particular program in a synchronized fashion using an MBSFN protocol. An "MBSFN synchronization area" refers to a group of cells that are interconnected and configured in a way such that they are capable of operating in a synchronized fashion to broadcast a particular program using an MBSFN protocol, regardless of whether or not they are currently doing so. Each eNB can belong to only one MBSFN synchronization area, on a given frequency layer. It is worth noting that an MBMS service area 502 may include one or more MBSFN synchronization areas (not shown). Conversely, an MBSFN synchronization area may include one or more MBSFN areas or MBMS service areas. Generally, an MBSFN area is made up of all, or a portion of, a single MBSFN synchronization area and is located within a single MBMS service area. Overlap between various MBSFN areas is supported, and a single eNB may belong to several different MBSFN areas. For example, up to 8 independent MCCHs may be configured in SIB-13 to support membership in different MBSFN areas. An MBSFN Area Reserved Cell or Base Station is a cell/base station within a MBSFN Area that does not contribute to the MBSFN transmission, for example a cell near a MBSFN Synchronization Area boundary, or a cell that that is not needed for MBSFN transmission because of its location.

**eMBMS SYSTEM COMPONENTS AND FUNCTIONS:** FIG. 6 illustrates functional entities of a wireless communication system 600 for providing or supporting MBSFN service. Regarding Quality of Service (QoS), the system 600 uses a Guaranteed Bit Rate (GBR) type MBMS bearer, wherein the Maximum Bit Rate (MBR) equals the GBR. These components are shown and described by way of example, and do not limit the inventive concepts described herein, which may be adopted to other architectures and functional distributions for delivering and controlling multicast transmissions.

The system 600 may include an MBMS Gate Way (MBMS GW) 616. The MBMS GW 616 controls Internet Protocol (IP) multicast distribution of MBMS user plane data to eNodeBs 604 via an M1 interface; one eNB 604 of many possible eNBs is shown. In addition, the MBMS GW controls IP multicast distribution of MBMS user plane data to UTRAN Radio Network Controllers (RNCs) 620 via an M1 interface; one UTRAN RNC 620 of many possible RNCs is shown. The M1 interface is associated to MBMS data (user plane) and makes use of IP for delivery of data packets. The eNB 604 may provide MBMS content to a user equipment (UE)/mobile entity 602 via an E-UTRAN Uu interface. The RNC 620 may provide MBMS content to a UE mobile entity 622 via a Uu interface. The MBMS GW 616 may further perform MBMS Session Control Signaling, for example MBMS session start and session stop, via the Mobility Management Entity (MME) 608 and Sm interface. The MBMS GW 616 may further provide an interface for entities using MBMS bearers through the SG-mb (user plane) reference point, and provide an interface for entities using MBMS bearers through the SGi-mb (control plane) reference point. The SG-mb Interface carries MBMS bearer service specific signaling. The SGi-mb interface is a user plane interface for MBMS data delivery. MBMS data delivery may be performed by IP unicast transmission, which may be a default mode, or by IP multicasting. The MBMS GW 616 may provide a control plane function for MBMS over UTRAN via a Serving General Packet Radio Service Support Node (SGSN) 618 and the Sn/Iu interfaces.

The system 600 may further include a Multicast Coordinating Entity (MCE) 606. The MCE 606 may perform an admission control function form MBMS content, and allocate time and frequency radio resources used by all eNBs in the MBSFN area for multi-cell MBMS transmissions using MBSFN operation. The MCE 606 may determine a radio configuration for an MBSFN Area, such as, for example, the modulation and coding scheme. The MCE 606 may schedule and control user plane transmission of MBMS content, and manage eMBMS service multiplexing, by determining which services are to be multiplexed in which Multicast Channel (MCH). The MCE 606 may participate in MBMS Session Control Signaling with the MME 608 through an M3 interface, and may provide a control plane interface M2 with the eNB 604.

The system 600 may further include a Broadcast-Multicast Service Center (BM-SC) 612 in communication with a content provider server 614. The BM-SC 616 may handle intake of multicast content from one or more sources such as the content provider 614, and provide other higher-level management functions as described below. These functions may include, for example, a membership function, including authorization and initiation of MBMS services for an identified UE. The BM-SC 616 may further perform MBMS session and transmission functions, scheduling of live broadcasts, and delivery, including MBMS and associated delivery functions. The BM-SC 612 may further provide service advertisement and description, such as advertising content available for multicast. A separate Packet Data Protocol (PDP) context may be used to carry control messages between UE and BM-SC. The BM-SC may further provide security functions such as key management, manage charging of content providers according to parameters such as data volume and QoS, provide content synchronization for MBMS in UTRAN and in E-UTRAN for broadcast mode, and provide header compression for MBSFN data in UTRAN. The BM-SC 612 may indicate session start, update and stop to the MBMS-GW 616 including session attributes such as QoS and MBMS service area.

The system 600 may further include a Multicast Management Entity (MME) 608 in communication with the MCE 606 and MBMS-GW 616. The MME 608 may provide a control plane function for MBMS over E-UTRAN. In addition, the MME may provide the eNB 604, 620 with multicast related information defined by the MBMS-GW 616. An Sm interface between the MME 608 and the MBMS-GW 616 may be used to carry MBMS control signaling, for example, session start and stop signals.

The system 600 may further include a Packet Data Network (PDN) Gate Way (GW) 610, sometimes abbreviated as a P-GW. The P-GW 610 may provide an Evolved Packet System (EPS) bearer between the UE 602 and BM-SC 612 for signaling and/or user data. As such, the P-GW may receive Uniform Resource Locator (URL) based requests originating from UEs in association with IP addresses assigned to the UEs. The BM-SC 612 may also be linked to one or more content providers via the P-GW 610, which may communicate with the BM-SC 612 via an IP interface.

In accordance with one or more aspects of the embodiments described herein, there is provided a technique for signaling the use of certain URLs in support of directing unicast Dynamic Adaptive Streaming over HTTP (DASH) accesses to an on-demand broadcast version of that content via the serviceLocation attribute in the media presentation description (MPD) for that DASH content. DASH allow for services that deliver continuous (streaming) media content over Hypertext Transfer Protocol (HTTP). The specifications for DASH primarily defines two formats: the MPD and the Segment formats.

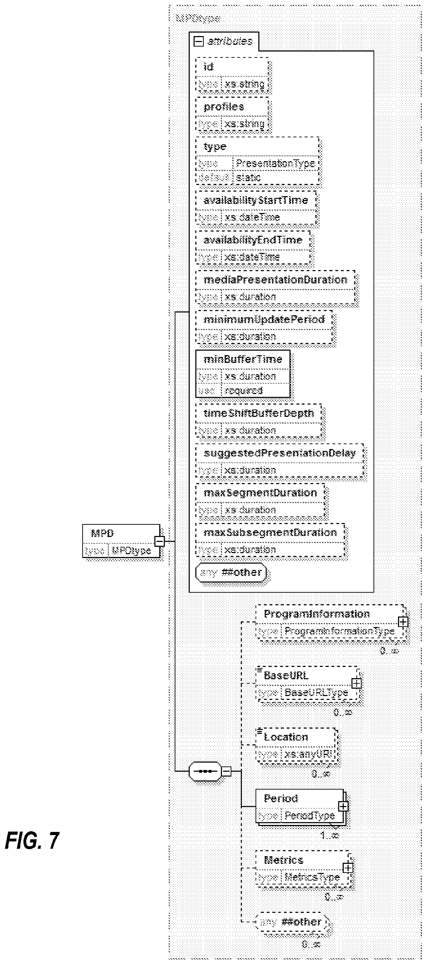

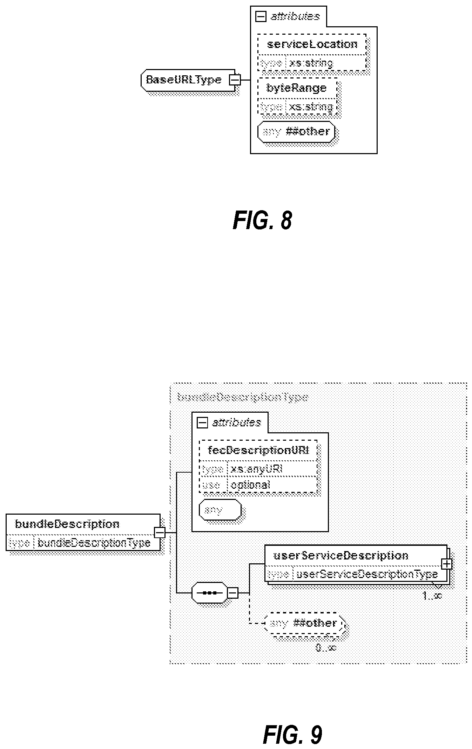

FIG. 7 illustrates an embodiment 700 of a high-level extensible markup language (XML) schema structure for an MPD. FIG. 8 depicts a schema 800 to illustrate the structure for a BaseURL which associates a serviceLocation and byteRange attribute(s) to base URLs. Lists of BaseURLs elements may be described at the MPD, at the Period, at the Adaptation Set, and at the Representation levels of an MPD.

In related aspects, BaseURLs may play the function of Base uniform resource identifiers (URIs). URLs at each level of the MPD may be resolved according to RFC3986 with respect to the BaseURL element specified at that level of the document (e.g., the MPD) or the level above. URL resolution applies to all URLs found in MPD documents, in particular URLs for Initialization and Media Segments which are or interest for the disclosure described here. Multiple BaseURL elements may be provided to specify one or more common locations where identical Segments can be accessed. In the absence of other criteria, the DASH Client may use the first BaseURL element as the base URI.

With reference to FIG. 8, the serviceLocation attribute for a BaseURL element, specifies a relationship between BaseURLs such that BaseURL elements with the same serviceLocation value are likely to have their URLs resolve to services at a common network location, such as, for example, a common Content Delivery Network. For instance, if the DASH client fetches segments for a representation (e.g., different versions of a given content, such as resolution, language, etc.) but decides to fetch segments from a different representation (e.g., because the access wireless network cannot continue supporting the current representation requirements on bandwidth), it can select the BaseURL for the new representation that has the same serviceLocation value as the previous representation. This use of the serviceLocation attribute acts as a hint to devices indicating that fetching segments for the new representation will experience similar performance (e.g., availability adjustment) as segments fetched from the previous representation via BaseURLs with the same serviceLocation value.

**ISSUES WITH DASH BROADCAST OVER eMBMS:** The sequential delivery of DASH Media Segments (e.g., media files) constitutes a media streaming service that may include the sequential transmission of media files or the DASH Media Segments. Streaming delivery of media using RTP is also possible, but RTP transport is typically not suitable for DASH segments.

In some broadcast networks, the broadcast streamed content can also be made available and accessed via unicast, as is the case for RTP streaming broadcast in eMBMS, for example. This alternative delivery of content provides a unicast fallback technique to access the content for a broadcast streaming service while not in broadcast coverage. A fallback technique to access the files of a broadcast file delivery service is typically not defined in broadcast networks.

Since the broadcast delivery of DASH segments typically make use of transport protocols employed for broadcast file delivery services (e.g., FLUTE), a unicast fallback alternative to access the content of broadcast DASH services is needed.

There are several issues to consider with respect to DASH broadcast over eMBMS or the like. One issue is that a broadcast DASH service can deliver different versions of the content (e.g., different representations) in different locations. It is also possible that different representations may only be available via broadcast, or only available via unicast, or available both via unicast and broadcast. So, a technique to signal which representations of a service are available for the currently desired/available broadcast or unicast transport is needed.

Another issue is that the transport of DASH segments may incur additional broadcast availability adjustment (e.g., delay or advance in availability) from the time segments may be available for fetching via unicast, wherein the broadcast availability adjustment is a broadcast latency in such a scenario. Availability of a segment received via broadcast delivery may incur additional availability adjustment from the time the segment can be received via unicast delivery, which may present problems when switching from one mode of delivery to another mode of delivery (e.g., from broadcast to unicast). In order to enable seamless unicast-to-broadcast (UC-BC) and broadcast-to-unicast (BC-UC) transitions as the device moves in and out of broadcast coverage, information on the broadcast availability adjustment should be communicated to the DASH client.

Another issue is that the representations available via unicast may only be accessible in certain geographical areas. Such geographical restrictions should be signaled to the DASH clients. Yet another issue is that a broadcast DASH service may also transport multiple representations via different FLUTE sessions; as such, a technique is needed to identify which FLUTE session to enable for a desired representation. For instance, multiple representations may be available via broadcast in a given area to provide alternative language or video resolution options. Selecting to receive just the representation of interest will improve the battery life of mobile entities.

In some circumstances, it may be desirable to create a broadcast DASH service on demand to reduce the load on system resources caused by multiple users fetching DASH content via unicast. It may also be necessary to make use of different URLs to signal devices that they need to switch from unicast to broadcast reception. Accordingly, solutions for addressing these issues are described below.

**TRANSPORT OF SIGNALING INFORMATION:** In order to address the issues described above, certain parameters may be signaled to DASH clients for support of the broadcasted DASH segments. Such parameters can be signaled as separate new parameters in the MPD. However, it may not be desirable or acceptable to further extend the MPD definition to add support for these additional parameters which are only used in certain scenarios of broadcast DASH.

As such, the proposed solutions described herein may signal these parameters as a uniform resource name (URN) under a registered Namespace Identifier (NID) - e.g., for 3GPP, the NID is 3gpp so that the URNs under 3GPP control are of the form urn:3gpp:{3gpp-urn}. Additionally, the URN Namespace Specific String (NSS) provides an embodiment of how to encode the necessary parameters as a colon-separated list of key=value pairs carried as strings in the serviceLocation attribute of BaseURLs or the like.

A possible alternative approach may involve using a comma-separated list of key=value pairs carried as a string in the serviceLocation attribute of BaseURLs. Another alternative approach may involve encoding these parameters in an XML structure, per an XML schema, and carry that XML encoded data in the serviceLocation attribute of BaseURLs. Yet another approach may involve adding additional attributes or elements to the MPD XML schema to capture the list of parameters carried in the URN, comma-separated list, or to the XML encoding or parameters in the serviceLocation attribute.

In the embodiment where a URN encoding is used to convey a list of key=value pairs, the following rules or requirements may apply. The first string in the URN NSS can be: sl (for serviceLocation). For example, in the case of 3GPP URNs, all URNs used in the serviceLocation attribute would start with "urn:3gpp:sl". The second string (or the first key=value pair) can be ":transport=" + value-string. For example, possible value-strings may be: "broadcast", "unicast", "both". Other key=value pairs can follow the ":transport=" + value-string, or variations thereof.

**UNICAST AVAILABILITY OF BROADCAST DASH SERVICES:** DASH provides a unicast streaming framework where each DASH client may fetch Media Segments via HTTP and in sequence according to a timeline defined in an MPD. The DASH segments may also be delivered to devices including a DASH client via a broadcast transport, where the Media Segments are broadcast via FLUTE or the like.

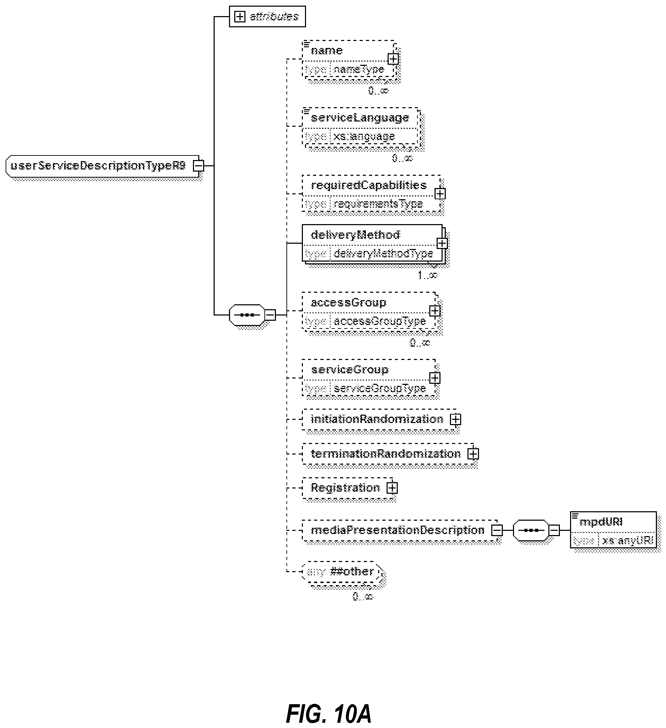

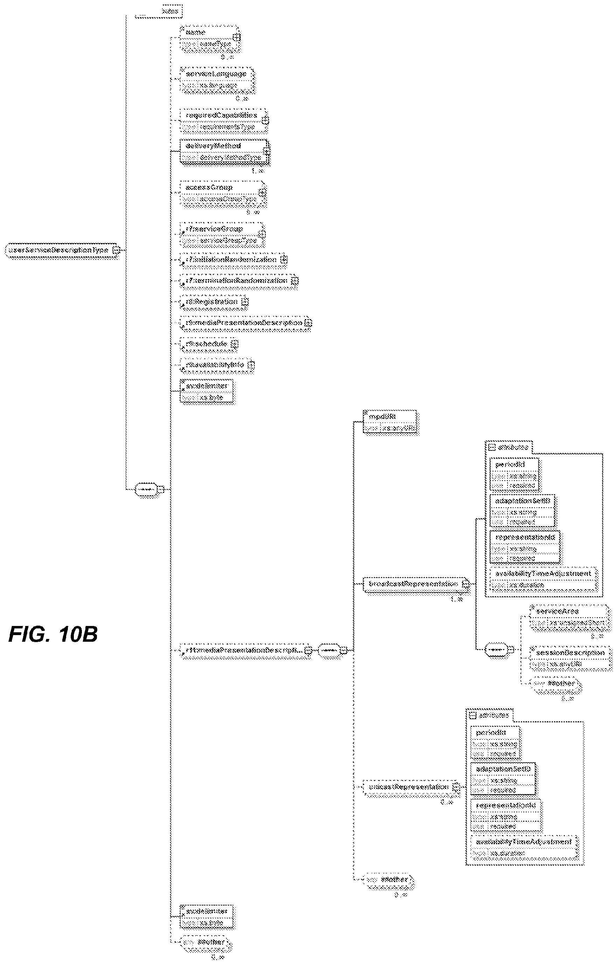

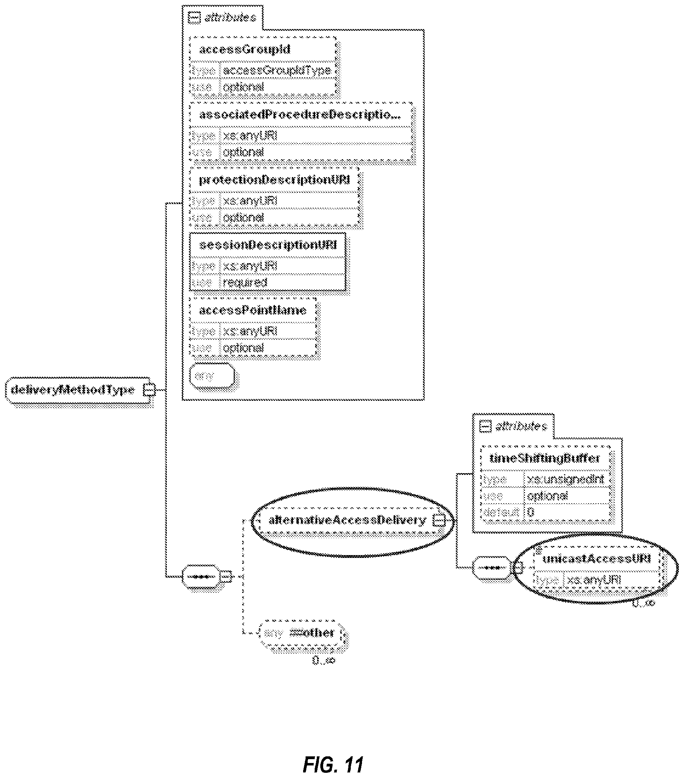

Broadcast systems typically include System Information (SI) metadata which describe the services available over the broadcast transport. In an eMBMS broadcast system, that SI may be referred to as the User Service Description (USD) and may include metadata to describe bundles of services, as shown in FIG. 9. It is noted that other examples of SI are the OMA Broadcast service guide and the MediaFLO Service Definition metadata. With reference to FIG. 10A, there is shown an embodiment of a USD for eMBMS, wherein each service may be described with parameters. Such parameters may include a deliveryMethod list (detailed in FIG. 11) and a reference to the MPD uniform resource identifier (mpdURI) associated with the service. The mpdURI may bind an MPD to the service. FIG. 10B illustrates another embodiment of a USD for eMBMS, described in further detail below.

As FIG. 11 illustrates for an eMBMS broadcast system, that the SI for a broadcast system may provide information related to where a unicast version of the broadcast service content can be found. In the case of eMBMS broadcast services using RTP streaming, the SI can provide via the unicastAccessURI in the deliveryMethod for a service a pointer to a session description protocol (SDP) file describing a unicast RTP streaming version for the same content. The presence of such URL may also function to signal that a unicast version of the service is available, whereas its absence indicates that the service is only available via broadcast. It is noted that parameters may be used to signal availability of unicast or the like. For a broadcast DASH service, attributes may be used to signal that, for a broadcast DASH service, unicast representation(s) are also available.

For a broadcast DASH service, explicit signaling of unicast availability via a separate URL in the SI is generally not desirable. For a broadcast DASH service such explicit signaling could provide a reference to an additional MPD describing the delivery of DASH segments via unicast. Since the replacement of the MPDs during playback tends to be disruptive, using an MPD for broadcast (e.g., signaled via the mpdURI for the eMBMS USD) and another MPD for unicast (e.g., signaled via the unicastAccessURI for the eMBMS USD) would not allow for a seamless transition of reception from broadcast to unicast delivery, and vice-versa. Therefore, it is desirable to embed the signaling of unicast availability in a single DASH MPD and leverage the MPD signaling of availability of segments from different locations via BaseURL elements of the type illustrated in FIG. 8. Provided is a way to signal to the DASH client which URLs are to be used for unicast vs. broadcast receptions. In this way, when making unicast reception of broadcast services, the DASH client will act as a typical DASH client and fetch segments using the unicast HTTP URLs in the single MPD.

This approach allows for a single MPD to describe how the service can be received via broadcast and unicast. A single MPD for broadcast and unicast receptions also allows for efficient support of seamless UC-BC and BC-UC reception hand-off as the DASH client moves in and out of broadcast coverage.

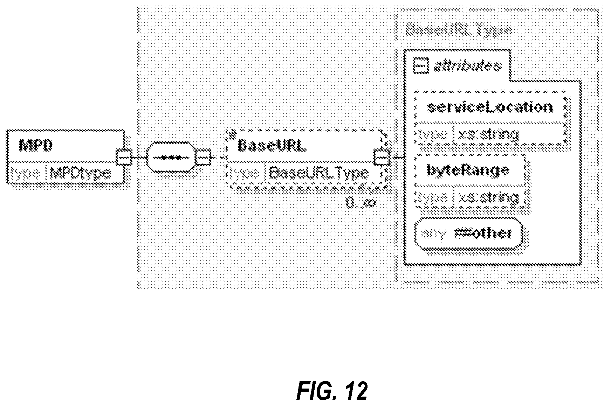

With respect to identifying segment URLs for unicast and broadcast receptions, FIG. 12 provides a simplification of FIG. 7 that illustrates the list of BaseURLs available at the MPD level while abstracting other attributes and elements from the MPD. For unicast transport, multiple BaseURLs are typically used to signal that identical Segments are accessible at multiple locations. The serviceLocation attribute may be defined to specify a relationship between BaseURLs such that BaseURL elements with the same serviceLocation value are likely to have their URLs resolve to services at a common network location. This allows a DASH client to use the serviceLocation when deciding which base URL to use when changing representations. For example, the DASH client may select a new representation with a BaseURL that has the same serviceLocation attribute as the BaseURL used for the old representation.

Since multiple BaseURLs for a given representation describe different locations from where segments for the service are available for fetching, for DASH services over broadcast systems, a format may be defined for the serviceLocation string. The format may provide additional information to signal whether a given broadcast DASH service or any combination of the representations thereof is available via broadcast only, via unicast only, or via both unicast and broadcast. More specifically, when using the URN format, the serviceLocation attribute may include a string starting with: "urn:3gpp:sl", as described above. Subsequent strings may be concatenated to the initial string starting with a ":" and followed by a string providing a key=value pair. The second string (or the first key=value pair) may be ":transport=" + value-string. Possible value-strings may be: "broadcast", "unicast", "both". Other values may be used. Example strings for the serviceLocation attribute may be urn:3gpp:sl:transport=broadcast, or urn:3gpp:sl:transport=unicast.

Other restrictions may be imposed on the use of URLs depending on the settings of certain value strings. For example, when the value-string is "broadcast", the URLs derived from using the associated BaseURL element may be used when the DASH client receives that service via broadcast. More specifically, if only one BaseURL exists with a value-string set to "broadcast", the service or the corresponding representation is only available via broadcast. If no BaseURL exists with a value-string set to "broadcast", the service or the corresponding representation is not available via broadcast. If multiple BaseURL with a value-string set to "broadcast" exist, multiple broadcast transport (e.g., FLUTE) sessions may be defined for a service or the service described by the MPD includes different representations which may be broadcast on different geographical areas. It is also possible that different representations may be broadcast in different locations. For illustrative purposes only, in the following discussion it is assumed that there is only one broadcast representation. For compatibility to DASH clients which do not support the encoding scheme described herein, the BaseURL with a value-string set to "broadcast" may be placed last on the list of BaseURLs. A BaseURL with a value-string set to "broadcast" may point the DASH client to a local (i.e., on-device) HTTP server by pointing to the local host: http://localhost/ or the like.

When the value-string is "unicast", the URL on the associated BaseURL element may be used when the DASH client accesses the service via unicast. If multiple BaseURLs exist with a value-string set to "unicast", the DASH client can use different approaches to selecting one of the BaseURLs when accessing the service via unicast. For example, one approach is to use the BaseURLs in sequence from the first BaseURL in the list.

When the value-string is "both", the URL on the associated BaseURL element can be used when the DASH client accesses the service either via unicast or while in broadcast coverage. If a BaseURL exists with a value-string set to "both", no additional BaseURLs should exist for a representation with a value-string set to "broadcast" (assuming only one broadcast representation exists). A BaseURL with a value-string set to "both" will point the DASH client to an external (i.e., to a network accessible server) HTTP server. Therefore, when the DASH client is in broadcast coverage and this URL is used, the device will support a technique to redirect the HTTP access to the local host.

**SAMPLE DASH CLIENT BEHAVIOR:** Based on the broadcast or unicast availability of DASH segments signaled in the MPD, a DASH client implementation may use the serviceLocation information on BaseURLs as follows. With respect to initial reception in broadcast coverage, the DASH client may start reception of a broadcast (e.g., eMBMS) DASH service while in broadcast coverage. The DASH client may: discover which representation is available via broadcast (assuming one broadcast representation); select the BaseURL with a serviceLocation attribute including either the strings ":transport=broadcast" or ":transport=both"; and/or perform segment fetches according to normal DASH client behavior using the selected BaseURL. Determining which broadcast representation is currently available while in broadcast can be done by matching the media segment file names signaled via the FLUTE transport.

With respect to transitioning out of broadcast coverage while consuming content via broadcast (BC-UC), the DASH client, receiving a broadcast (e.g., eMBMS) DASH service via broadcast, may transition out of broadcast reception of segments and begin unicast reception of segments. Transition out of broadcast coverage can be detected by the absence of SIB-13 being available among the SIBs in LTE transport, and more immediately the unavailability of the LTE bearer (assigned the service temporary mobile group identify (TMGI) or the like) carrying that broadcast DASH service. In related aspects, then the DASH client may continue reception of the current representation if the unicast bandwidth can support that representation and a BaseURL exists for the representation with the serviceLocation attribute including either the strings ":transport=unicast" or ":transport=both". Otherwise, the DASH client may change to a different representation in which a BaseURL exists with the serviceLocation attribute including either the strings ":transport=unicast" or ":transport=both". If multiple such BaseURLs exist, the DASH client may select one. In further related aspects, the DASH client may perform segment fetches according to normal DASH client behavior using the selected BaseURL.

With respect to initial reception out of broadcast coverage (e.g., when SIB-13 is not among the System Information Blocks (SIBs) in the LTE transport), the DASH client may start unicast reception of a broadcast (e.g., eMBMS) DASH service available via unicast while not in broadcast coverage. The DASH client may: determine the available bandwidth to fetch segments and select a representation to play; select a BaseURL with serviceLocation attribute including either of the strings ":transport=unicast" or ":transport=both"; and/or perform segment fetches according to normal DASH client behavior using the selected BaseURL.

With respect to transitioning to broadcast reception while consuming content via unicast (UC-BC), the DASH client, currently receiving a broadcast (e.g., eMBMS) DASH service via unicast, may transition into broadcast coverage and start reception of segments via broadcast. In related aspects, the DASH client may discover which representation is available in the broadcast coverage, e.g., via the media file name described in the FLUTE transport. In further related aspects, the DASH client may continue reception of the current representation if the representation being broadcast is the same as the representation being accessed via unicast. In this case, the DASH client may select the BaseURL with the serviceLocation attribute including either the strings ":transport=broadcast" or ":transport=both". In yet further related aspects, the DASH client may transition to the broadcast representation and select the BaseURL with the serviceLocation attribute including either the strings ":transport=broadcast" or ":transport=both". In still further related aspects, the DASH client may perform segment fetches according to normal DASH client behavior using the selected BaseURL.

**GEOGRAPHICAL CONSTRAINT ON UNICAST AVAILABILITY OF BROADCAST DASH SERVICES:** Even if a broadcast DASH service is made available via unicast, there may be contractual obligations or other requirement that restrict unicast availability of the service content to certain geographical areas.

Geographical constraints on unicast availability may be indicated in BaseURLs in the MPD for a broadcast DASH service by adding another value string. For example, BaseURLs in the MPD for broadcast DASH service with the associated serviceLocation attribute including either the string ":transport=unicast" or ":transport=both" may indicate geographic availability constraints for unicast receptions via additional string formats also carried in the serviceLocation attribute. Specifically, the serviceLocation attribute may include a string, when using the urn format, starting with "urn:3gpp:sl", and it may include either the ":transport=unicast" or ":transport=both" to indicate that the service is available via unicast.

The string (of key=value pair format) ":uGeo3GppCellId=" + CellID-string may indicate via the CellID-string a 3GPP cell ID where the service can be consumed via unicast. An example string for the serviceLocation attribute may be urn:3gpp:sl:transport=unicast:uGeo3GppCellId=345690 or the like.

The string (of key=value pair format) ":uGeo3Gpp2S+N+Z=" + SID_value + "+"+ NID_value + "+"+ PZID_value may indicate via the concatenation of SID, NID, PZID, and "+" strings a 3GPP2 cell ID where the service can be consumed via unicast. An example string for the serviceLocation attribute may be urn:3gpp:sl:transport=unicast:uGeo3Gpp2S+N+Z=23+34+45 or the like. Accordingly, other strings can be defined to capture other geographical descriptors that may be available to the device.

With respect to sample DASH client behavior, based on the unicast availability of DASH segments signaled in the MPD, and any geographical constraints, a DASH client implementation may use the serviceLocation information on BaseURLs as follows. For unicast reception with no geographical constraining, the DASH client may start reception of a broadcast (e.g., eMBMS) DASH service via unicast (i.e., the device is not in broadcast coverage and BaseURLs exist with serviceLocation attribute including either the string ":transport=unicast" or ":transport=both"). In related aspects, the DASH client may: determine the available bandwidth to fetch segments and select a representation to play; select a BaseURL with serviceLocation attribute including either the string ":transport=unicast" or ":transport=both"; verify that no BaseURL exists where the serviceLocation includes a string starting with ":uGeo"; and/or perform segment fetches according to normal DASH client behavior using the selected BaseURL.

For unicast reception with geographical constraints while in the constrained area, the DASH client may start reception of a broadcast (e.g., eMBMS) DASH service via unicast. In related aspects, the DASH client may: determine the available bandwidth to fetch segments and select a representation to play; select a BaseURL with serviceLocation attribute including either the string ":transport=unicast" or ":transport=both"; verify that BaseURLs exist where the serviceLocation includes a string starting with ":uGeo", decides it can understand the geographical information provided, and determines that it is in the area described; and/or while in the area described, perform segment fetches according to normal DASH client behavior using the selected BaseURL.

For situations where there is no unicast reception with geographical constraints while outside of the constrained area, the DASH client may not start reception of a broadcast (e.g., eMBMS) DASH service via unicast and service playback would stop. In related aspects, the DASH client may: determine the available bandwidth to fetch segments and selects a representation to play; select a BaseURL with serviceLocation attribute including either the string ":transport=unicast" or ":transport=both"; verify that BaseURLs exist where the serviceLocation includes a string starting with ":uGeo", decide that the UE (or DASH client) can understand the geographical information provided, and determines that the UE is NOT in the area described; decide that the geographical information provided cannot be understood; and/or while NOT in the area described, not perform segment fetches according to normal DASH client behavior using the selected BaseURL.

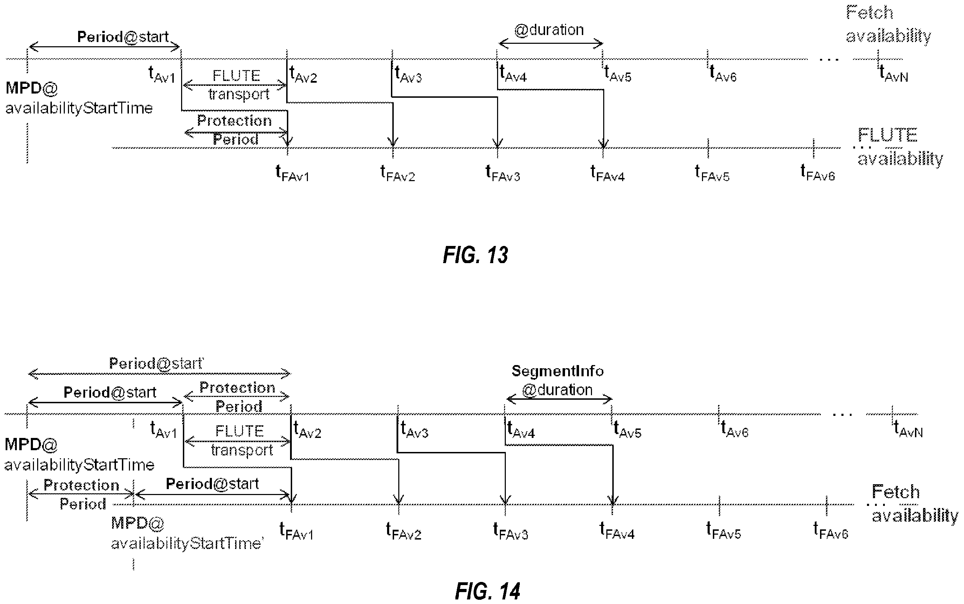

**TRANSPORT AVAILABILITY ADJUSTMENT CONSIDERATION:** The timeline for the availability of DASH segments may be described in the MPD, as illustrated in FIG. 13. The MPD availabilityStartTime, referred to herein as MPD@availabilityStartTime defines the absolute time from which that timeline is anchored. The start attribute in the first Period of the MPD describes a duration from the availabilityStartTime when the first segment is available for fetching. Subsequent segments for the same representation are spaced by an appropriate duration attribute in the MPD for the representation when segments are of the same duration (i.e., each segment is spaced by a segment duration). FIG. 13 also illustrates that the broadcast transport to UEs via FLUTE and an LTE bearer cause the availability of segments to be later for FLUTE/LTE delivery than when they are described in the MPD timeline described above. When media files are delivered via FLUTE, the DASH client fetches the segments from a local storage, as opposed to a unicast fetch from a remote server. The unicast availability timeline may be the timeline described by the MPD availabilityStartTime and duration attributes.

In related aspects, the segment availability timeline in broadcast delivery need not be later than that of unicast delivery, and may in fact be before the segment availability via unicast delivery. In this case, the "advertised" unicast segment availability timeline, as given by the availabilityStartTime and duration attributes in the MPD may represent the "latest" time instants when segments of a DASH Media Presentation can be ensured to be available (for HTTP retrieval by the DASH client) among the entirety of HTTP servers/Content Delivery Networks within the scope of the MPD document. It is possible that the availability time of a broadcast-delivered Segment, which involves the combination of a) reception of the DASH Segment at the BM-SC from the content source, b) transmission over FLUTE across the LTE core network and RAN to the UE, and/or c) FLUTE reception, FEC decoding and Segment recovery at the UE and placement into local HTTP cache for fetching, may occur before that Segment has arrived at a remote Content Distribution Network (CDN) or HTTP server. Therefore, the broadcast-delivered Segment availability time can be earlier than, the same, or later than the unicast availability time. It is noted that the MPD may be available/provided to a multitude of devices, and may refer to multiple access networks or CDNs from which a device in possession of the MPD may retrieve DASH Segments. For example the entity that produced the MPD document and the service provider of the DASH content delivery may deliver the Media Presentation and individual Representations as described by the MPD.

Given that the indication of unicast Segment availability time expressed by MPD@availabilityStartTime is the very latest possible time across all HTTP servers governed by the MPD document, it is useful that individual unicast access networks/CDNs which can guarantee earlier Segment availability times can signal that difference, allowing the user to acquire and view the DASH content sooner. In other words, MPD@availabilityStartTime is the worst case for the unicast start time. There will be different latencies to distribute content to different CDNs. This can be done by adjusting the availability timeline for the segments of the representation by the latency period defined for that representation. A parameter, referred to herein as availabilityTimeAdjustment (shown as Protection Period in FIG. 13) may be added under the BaseURL element to indicate adjustment from the MPD@availabilityStartTime value for a given access network/technology. In other words, availabilityTimeAdjustment may be generically used to indicate Segment availability time over a given unicast or broadcast network as compared to the worst-case unicast availability time.

In related aspects, the availability adjustment for an entire Period may be a negative value with an absolute value large enough such that the resources in the period are accessible before the MPD@availabilityStartTime, which would allow earlier downloading of data segments to improve the user experience.

With reference to FIG. 13, there is shown a fetch availability timeline a DASH client could use to fetch segments via unicast. The FLUTE availability timeline in FIG. 13 illustrates that there is an availability adjustment involved in broadcasting segments, for instance via an eMBMS FLUTE session, which may be due to segment packetization and FEC encoding for transport, packet broadcast towards the UEs, and FEC decoding and segment re-assembly on the device. For a DASH client accessing these broadcast segments, this availability adjustment can signal that the time availability for fetching segments should be different depending on whether the segment is fetched via unicast or fetched via broadcast delivery. The DASH client should take into consideration a protection period when requesting segments via broadcast.

The protection period indicates to the DASH client that the availability of segments for fetching via broadcast will be delayed relative to the same segments fetched via unicast.

**SIGNALING PROTECTION PERIOD** FOR **BROADCAST DELIVERY OF DASH SEGMENTS:** As described above, the BaseURLs in the MPD for a broadcast DASH service with the associated serviceLocation attribute may include the string ":transport=broadcast" or ":transport=both" to indicate that the representation is available via broadcast. In order to account for the availability adjustment associated with the broadcast delivery of segments an additional string format also carried in the serviceLocation attribute may be used to convey the protection period information. For example, the serviceLocation attribute may include a string, when using the URN format, starting with "urn:3gpp:sl", and may include the strings ":transport=broadcast" or ":transport=both" to indicate that the service is available via broadcast.

The string (of key=value pair format) ":pp=" + ppValue may signal via the ppValue a protection period, e.g., in milliseconds or other time increments, to be accounted for when the DASH client requests segments via broadcast reception. An example string for the serviceLocation attribute may be urn:3gpp:sl:transport=broadcast:pp=50 or the like.

With respect to sample DASH client behavior, based on the broadcast availability of DASH segments signaled in the MPD, and information on a protection period, a DASH client implementation may use the serviceLocation information on BaseURLs as follows.

For reception via broadcast delivery, the DASH client may: discover which representation is available in a broadcast area; select the BaseURL with serviceLocation attribute including either the string ":transport=broadcast" or ":transport=both"; determine the protection period indicated in a substring in the serviceLocation attribute starting with ":pp"; and/or perform segment fetches according to the segment availability timeline in the MPD using the selected BaseURL, but adjusting (i.e., delaying or making earlier) segment fetches by an additional ppValue milliseconds indicated in the string including ":pp". This may allow a mobile in a given geographical area to make request for segments earlier than advertised, providing a lower latency experience to the user, or causing a mobile to fetch segments at a later time then advertised and thus avoiding error conditions when the segments would only be available later than what is advertised in the MPD.

For reception out of broadcast coverage, the DASH client may: determine the available bandwidth to fetch segments and select a representation; select a BaseURL with serviceLocation attribute including either the string ":transport=unicast" or ":transport=both"; and/or perform segment fetches according to the exact segment availability timeline in the MPD using the selected BaseURL, with no additional segment fetch delaying performed.

**ALTERNATIVE TO SIGNALING A PROTECTION PERIOD FOR BROADCAST DELIVERY OF DASH SEGMENTS:** An alternative for accounting for broadcast latencies is illustrated in FIG. 14. Rather than explicitly signaling a protection period and accounting for it while in broadcast coverage, the MPD for a broadcast DASH service may account for the availability adjustment of broadcast transport via existing MPD parameters. This is illustrated in FIG. 14 by adding the protection period to the MPD availabilityStartTime attribute or by adding the protection period to the start attribute of the first MPD Period. The effect of adding the protection period to either of the parameters as described above is that unicast fetches are also delayed.

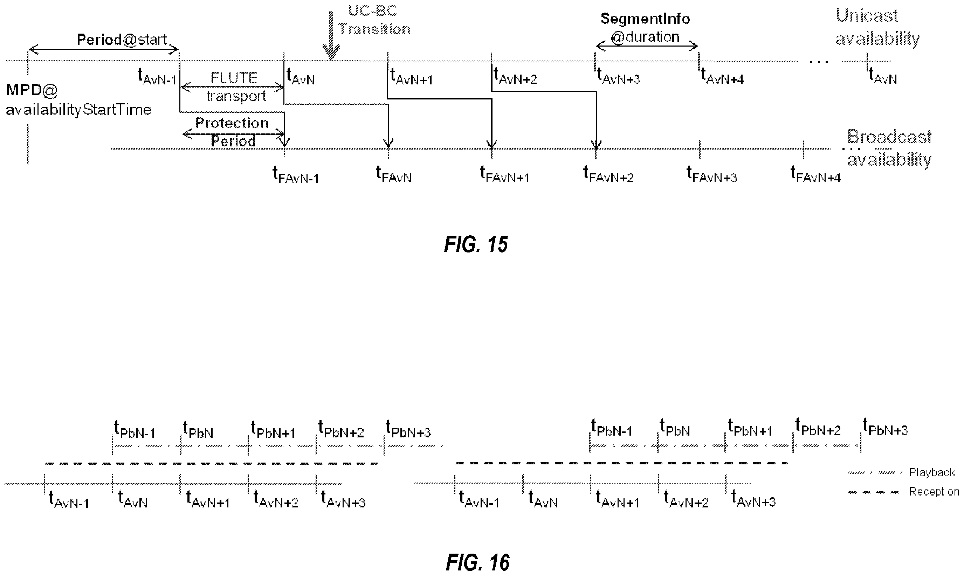

**SEAMLESS UC-BC/BC-UC TRANSITIONS:** In considering the two alternatives to account for the additional availability adjustment in the broadcast transport, the UC-BC and BC-UC transitions on the reception and buffering before playback of segments via unicast and broadcast should be considered. FIG. 15 illustrates a point in time when the transition happens from the reception of segments via unicast to receptions via broadcast at a point in time when segment N is being fetched via unicast.

One goal for a seamless transition is to minimize interruption during media playback when the DASH client transitions between unicast and broadcast receptions. To accomplish this, the DASH client may accumulate more than one segment before playback starts. The number of segments to accumulate before initiating playback may be signaled via the minBufferTime attribute or the like in the MPD. FIG. 16 illustrates an embodiment with two delayed playback scenarios (at times t_{Pbi}) where the playback of segments fetched via unicast (at times t_{Avi}) is delayed by one (left timeline) and two (right timeline) segments. This implies that one or two segments, respectively, need to be accumulated before playback can start. The example of FIG. 16 illustrates a scenario where it takes one segment duration to download one segment via unicast in the case where segments are of the same size and bandwidth is available to download a segment in one segment duration. It is noted that the embodiment of FIG. 16 is merely illustrative, and that similar figures can be drawn to describe other scenarios where segments are variable in size and the amount of segments to buffer would account for such variability.

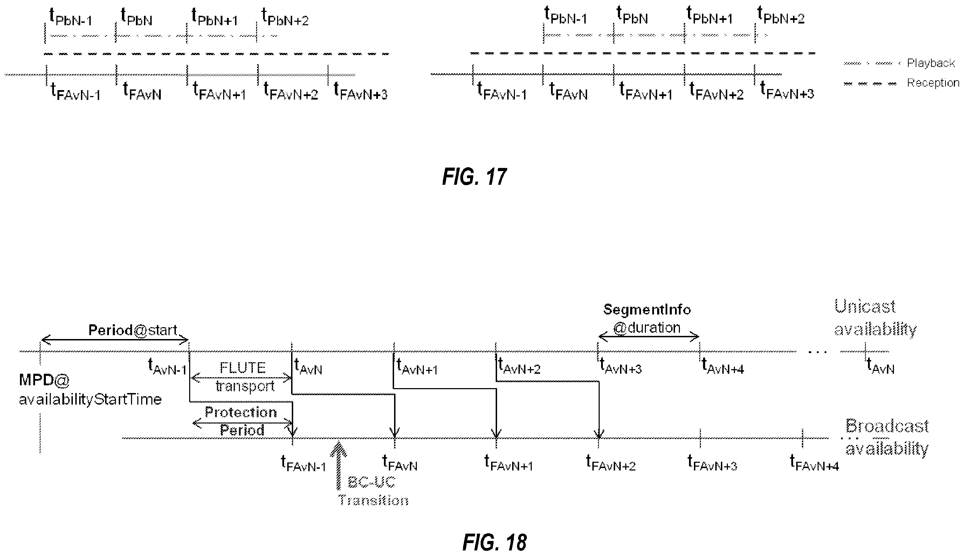

FIG. 17 illustrates similar delayed segment playback scenarios for segments received via broadcast (at time t_{FAvi}). These segments may be immediately available to the client since they were delivered via broadcast, and available locally as indicated earlier. The embodiment of FIG. 17 suggests that it takes one segment duration to deliver one segment via broadcast in the case where segments are of the same size and the broadcast bandwidth is enough to deliver a segment in one segment duration. It is noted that the embodiment of FIG. 17 is merely illustrative, and that similar figures can be drawn to describe similar scenarios where segments are variable in size and the amount of segments to buffer would account for such variability.

FIG. 17 also illustrates the use of the same minBufferTime requirement of one or two segments before playback. Further, FIG. 17 also illustrates that when the DASH client accounts for the protection period, namely, the fetching is driven by the broadcast segment availability (at time t_{FAvi}) which is a protection period later than the unicast availability (at time t_{Avi}) (see FIG. 15), the segments may be readily available locally and may be fetched with minimum latency. The fetched segments are ready for playback immediately after the first or second segment, when minBufferTime is one or two segments, respectively.

Given the timelines in FIGS. 16-17, the impact to a UC-BC transition, assuming the broadcast availability is detected while the DASH client retrieves segment N via unicast (see arrow in FIG. 15), may include the following. First, the segment N may not be successfully received via broadcast (not enough symbols for FEC decoding), so the UC-BC transition may occur at a later time. Second, successful reception of DASH segments via broadcast may not be guaranteed until the first segment (N+1) is received via broadcast. As such, the DASH client may complete segment N retrieval via unicast and retrieve segment N+1 via unicast. Third, the DASH client may delay (stop unicast) fetching of segments from segment N+2 and may rely on broadcast delivery of segments. Fourth, considering FIGS. 16-17, seamless transition may be attained, wherein segment N+2 may be available at the same time as if it were fetched via unicast. Namely, the playback can proceed seamlessly. Accordingly, seamless UC-BC transitions may be achieved if playback is delayed by one segment (i.e., by minBufferTime set to one segment). Depending on circumstances, seamless transitions may require a larger or smaller segment delay.

FIG. 18 illustrates the reverse BC-UC transition by highlighting a point in time when the BC-UC transition happens while the reception of segment N is being fetched via broadcast. Segment N may not be successfully received via broadcast (not enough symbols for FEC decoding), which may not be determined immediately. Upon determining that segment N was not successfully received, the DASH client may initiate retrieval of segment N via unicast to ensure continuous playback. The DASH client may need to switch to a lower data rate representation to catch-up.

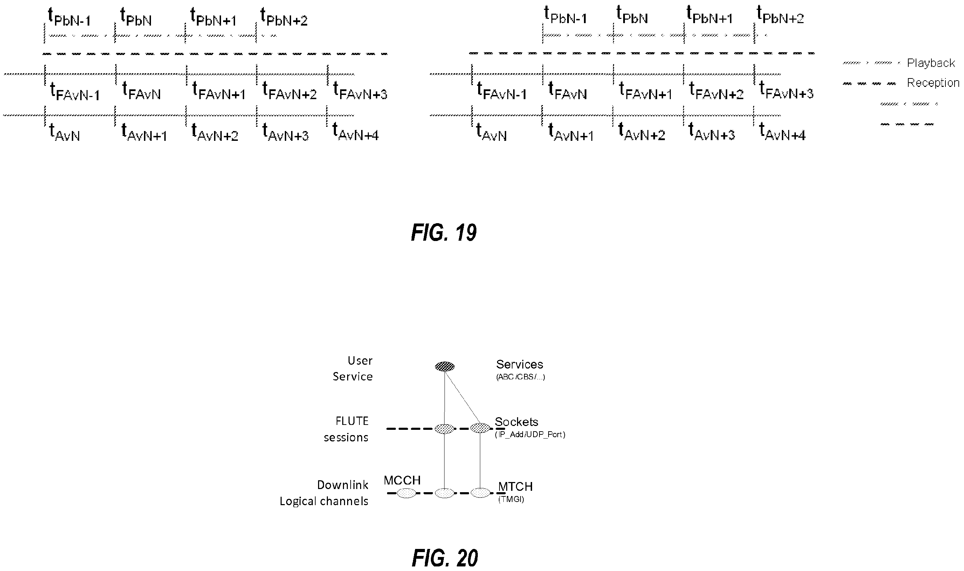

Accordingly, seamless BC-UC hand-off may only be attainable if segment N can be retrieved via unicast in time for playback. As the left timeline of FIG. 19 shows, this is not possible if minBufferTime or the like prescribes only one segment. With minBufferTime prescribing two segments (see the right timeline of FIG. 19), the DASH client has one segment time to catch up and avoid playback disruptions. The DASH client should therefore be instructed to accumulate more than two segments before playback to accommodate a catch-up download via unicast for a seamless transition from broadcast to unicast.

In related aspects, when including the protection period on MPD attributes, the DASH client may be instructed to accumulate more than two segments before playback. As such, a drawback of including the protection period in existing parameters in the MPD may be the additional segment availability adjustment.

**USE OF SESSION DESCRIPTION PROTOCOL TO SIGNAL BROADCAST DELIVERY AND ASSOCIATED BROADCAST AVAILABILITY ADJUSTMENT OF A GIVEN REPRESENTATION OF THE STREAMING SERVICE:** It may be undesirable in certain situations to directly use the MPD (e.g., via the serviceLocation attribute or the like) for indicating the unicast vs. broadcast delivery mode of the Media Segments of a Representation. For example, in certain implementations, network-based generation of DASH segments and associated MPD may be agnostic to the transport method of the media contents (unicast and/or broadcast). In such cases, it may be desirable for the unicast vs. broadcast delivery mode to be signaled using Service Announcement information (also referred to as System Information or SI) or the like.

In particular, in the case of 3GPP MBMS, a component of the SI or USD may be a Session Description metadata fragment or the like. Such parameters and syntax may in turn be based on the SDP specified by IETF RFC 4566. It is noted that the terms "attributes" or "a=" refer to the primary way of extending SDP, and may be defined at the session level (i.e., applicable to media components of the FLUTE session) or at the individual media level within a session. In related aspects, the attribute fields may be of two forms, for example. In related aspects, there is "property" attribute of the form "a=<flag>", and for which the presence of the attribute simply indicates that the attribute is a property of the session. In further related aspects, there is a "value" attribute of the form "a=<attribute>:<value>", for which the value of the named attribute is comprised of an arbitrary octet string or the like.

In accordance with aspects of the embodiments described herein, there is provided a new session-level attribute "a=<representation-transport-mode>:" to denote the transport mode of the associated session. The defined <value> sub-field of this attribute may be a choice between the text strings "unicast", broadcast", or "both", signifying unicast-only, broadcast-only, or both unicast and broadcast delivery modes for the segments of the corresponding Representation or the like.

Furthermore, broadcast delivery of Segments may be associated with an additional delay relative to unicast delivery, and referred to as the "protection period". Such parameter(s) may be added in the above "representation-transport-mode" attribute via a new sub-field <protection-period> or the like. For example, the full syntax of the "representation-transport-mode" attribute may be as follows:

```
             a=representation-transport-mode: <representation-id> SP ("broadcast" /
      "unicast" / "both") SP [<protection-period>],
             where (in ABNF notation):
                   <representation-id> = 1*(VCHAR)
                   ;string of visible characters,
                   and
                   <protection-period> = 1*DIGIT
```

In related aspects, <representation-id>, which is equivalent to the value of the "id" attribute of the Representation in the MPD fragment of the USD, may identify the Representation and associated DASH segments to which the subsequent delivery mode tag applies to. If the transport mode is "broadcast" or "both", then the sub-field <protection-period> may appear, which represents the broadcast availability adjustment for that Representation.

In further related aspects, it is expected that the Service Announcement Client will use the above attribute information to inform the DASH Client of the delivery mode for the corresponding Representation in the MPD, as well as the protection period for broadcast delivery mode.

**USE OF SESSION DESCRIPTION PROTOCOL TO SIGNAL BROADCAST AVAILABILITY ADJUSTMENT OF FLUTE SESSION:** An alternative to the technique described above for signaling broadcast availability adjustment is to use the Session Description fragment to signal the broadcast delay, whereas the transport mode is declared using the serviceLocation attribute of the MPD. This approach has the benefit of decoupling the availability adjustment or protection period information from DASH. In other words, besides FLUTE delivery of DASH content as a streaming service, there could be other file delivery service applications for which knowledge of the broadcast availability adjustment is useful to enable the application to use the delivered contents sooner. Examples of such applications include the broadcast of dynamic news or stock ticker information, for near real-time background display on a mobile terminal. For such applications, the files associated with FLUTE delivery may be protected by Application Layer FEC (e.g. RaptorQ or the like) which may involve significant time interleaving in the creation of encoded symbol blocks. Announcing the broadcast availability adjustment/protection period generically via Session Description fragment would enable the UE to take this delay into account when scheduling the playback of the associated content.

The technique for signaling the protection period in the SDP may be implemented, for example, according the following:

```
             a=broadcast availability adjustment: <protection-period>,
             where (in ABNF notation [14]):
                   <protection-period> = 1*DIGIT
```

It is expected that the Service Announcement Client (i.e., a functionality of a broadcast capable UE) will inform the other functionality in the UE of the broadcast availability adjustment so as to take this delay into account when scheduling the playback of the associated content delivery mode. Such a client functionality may involve the DASH Client, in the case of broadcast delivery of DASH content.

**DETERMINING THE APPROPRIATE FLUTE SESSION:** For some broadcast DASH services, it may be desirable to simultaneously broadcast two alternative representations of the service. For instance, the two representations may differ in the video resolution. Each resolution may be tailored for different device types, one of small screen size (e.g., smart phones) and the other of large screen size (e.g., tablets). Since only one of these representations is typically consumed/utilized by a given device, each representation may be broadcast using different transport sessions. In the case of eMBMS broadcast, the representations can be two FLUTE sessions carried in different eMBMS bearer channels, which is illustrated in the embodiment of FIG. 20.

With regard to associating FLUTE sessions to representations, BaseURLs in the MPD for a broadcast DASH service with the associated serviceLocation attribute may include either the string ":transport=broadcast" or ":transport=both" for a representation indicating that the representation is available via broadcast. In order to signal the appropriate broadcast transport session (e.g., a FLUTE session in eMBMS) for a representation, an additional string format may be carried in the serviceLocation attribute as follows.

In a first aspect, when using the URN format, the serviceLocation attribute for the BaseURL for a representation may include a string starting with "urn:3gpp:sl", and may include either the ":transport=broadcast" or ":transport=both" to indicate that the representation is available via broadcast. In a second aspect, the string (of key=value pair format) ":flute=" + sourceIPAddValue + "+" + tsiValue may signal via the sourceIPAddValue and the tsiValue the source IP address and TSI that jointly uniquely identify a FLUTE session. An example string for the serviceLocation attribute may be urn:3gpp:sl:transport=broadcast:flute=198.152.39.10+4567 or the like.

In a third aspect, an alternative string (of key=value pair format) ":fluteSDP=" + sdpURLValue may signal via the sdpURLValue the URL that identifies one of the FLUTE sessions defined for the broadcast service. An example string for the serviceLocation attribute may be: urn:3gpp:sl:transport=broadcast:fluteSDP= http://example.com/serviceX/service.sdp or the like. In a fourth aspect, other strings may be defined to describe transport sessions other than FLUTE sessions.

With regard to sample DASH client behavior, based on the broadcast availability of DASH segments signaled in the MPD, and information on the mapping of FLUTE sessions to representations, a DASH client implementation may use the serviceLocation information of BaseURLs for reception in broadcast coverage, as follows. In a first aspect, the DASH client may select a desired representation based on media description information (e.g., screen resolution). In a second aspect, the DASH client may detect that multiple representations are available via broadcast, such as, for example, when the serviceLocation information of the BaseURLs for these representations include either the string ":transport=broadcast" or ":transport=both". In a third aspect, the DASH client, upon detecting that it is in broadcast coverage, may select a BaseURL with a serviceLocation attribute including either the string ":transport=broadcast" or ":transport=both" that is associated with the selected representation. In a fourth aspect, the DASH client may cause reception of segments via broadcast to occur via the FLUTE session (in case of eMBMS) identified by the string including ":flute=" or ":fluteSDP=" in the serviceLocation attribute of the selected BaseURL. In a fifth aspect, the DASH client may perform segment fetches according to the segment availability timeline in the MPD using the selected BaseURL.

**SIGNALING UC-BC URLS FOR ON DEMAND SERVICES:** A broadcast system may support the definition of broadcast DASH services on demand as a way to reduce system resource usage by multiple users accessing certain DASH content via unicast reception. In some circumstances, it may be necessary to redirect user devices consuming unicast DASH content to a broadcast DASH service carrying the same content. This redirection process may make use of HTTP redirection features to cause the user devices to re-request a desired segment using a different URL than the URL used for the original request. Use of these re-directed URLs can act as a trigger for the user device to determine the availability of a new broadcast DASH service for the same content being fetched via unicast.

With respect to identifying segment URLs for unicast-to-broadcast receptions, BaseURLs in the MPD for a broadcast DASH service with the associated serviceLocation attribute including the string ":transport=unicast" indicate that the representation is available via unicast. In order to further indicate that certain unicast URLs are intended only to support the redirection approach, an additional string format may also be carried in the serviceLocation attribute to identified URLs used for redirection. More specifically, the serviceLocation attribute may include a string, when using the urn format, starting with "urn:3gpp:sl", and may include the string ":transport=unicast" to indicate that the service is available via unicast. Also, the string (of key=value pair format) ":transition=" + transValue may indicate that the URL is intended only to support redirection technique where the transValue could be either UC-BC or BC-UC. An example string for the serviceLocation attribute may be urn:3gpp:sl:transport=unicast:transition=UC-BC or the like.

With respect to sample DASH client behavior, when DASH content available via unicast may also be made available via broadcast to off-load unicast traffic, the associated MPD for content may signal broadcast and unicast availability of the content. Information on transition URLs may also be present to identify the URLs to be used for transition redirection. For transition redirection, the DASH client implementation may involve using the serviceLocation information of BaseURLs as explained below.

In a first aspect, the DASH client may start unicast reception of the DASH content where the DASH client: (a) determines the available bandwidth to fetch segments and selects a representation to play; (b) selects a BaseURL with serviceLocation attribute including either the string ":transport=unicast" or ":transport=both", except BaseURLs including the strings ":transport=unicast" and ":transition="; and/or (c) performs segment fetches according to normal DASH client behavior using the selected BaseURL.

In a second aspect, there may be signaling of broadcast service availability while consuming content via unicast (i.e., indication of unicast to broadcast transition). The DASH client receiving DASH content via unicast may get an HTTP redirection to another URL. The DASH client then: (a) evaluates if the redirected URL matches a BaseURL of the MPD for the same representation where the corresponding serviceLocation attribute includes strings ":transport=unicast" and ":transition=UC-BC"; (b) if such a match is found, carries out the transition; and/or (c) continues fetching the segments from the redirected URLs until availability of a broadcast version of the content can be determined.

**CONVEYING PARAMETERS VIA COMMA-SEPARATED STRINGS:** The different parameters described herein have been encoded using a URN format for the purpose of illustration and not by way of limitation. Alternatively, a comma-separated string may be employed. In one embodiment, a comma-separated string may implemented as follows. The first string to be carried in the serviceLocation attribute of BaseURLs may be "3gpp-sl" or the like. Sub-sequent strings may be concatenated to the initial string starting with a "," and followed by a string providing a key=value pair or the like.

The second string (or the first key=value pair) may be ",transport=" + value-string or the like. Possible value-strings may be: "broadcast", "unicast", "both". Example strings for the serviceLocation attribute may be 3gpp-sl,transport=broadcast or 3 gpp-sl,transport=unicast.

In related aspects, to signal geographical availability of a broadcast DASH service via unicast, the string (of key=value pair format) ",uGeo3GppCellId=" + CellID-string may indicate via the CellID-string a 3GPP cell ID where the service can be consumed via unicast. An example string for the serviceLocation attribute may be 3gpp-sl,transport=unicast,uGeo3GppCellId=345690 or the like.

The string (of key=value pair format) ",uGeo3Gpp2S+N+Z=" + SID_value + "+"+ NID_value + "+"+ PZID_value may indicate via the concatenation of SID, NID, PZID, and "+" strings a 3GPP2 cell ID where the service can be consumed via unicast. An example string for the serviceLocation attribute may be:

```
 3gpp-sl,transport=unicast,uGeo3Gpp2S+N+Z=23+34+45 or the like. Other strings can
 be defined to capture other geographical descriptors that may be available to the device
```

In further related aspects, the string (of key=value pair format) ",pp=" + ppValue will signal via the ppValue a protection period in milliseconds to be accounted for when the DASH client requests for segments while in broadcast coverage. An example string for the serviceLocation attribute may be:

```
 3gpp-sl,transport=broadcast,pp=50 or the like.
```

In yet further related aspects, to signal the appropriate broadcast transport session for a representation, the string (of key=value pair format) ",flute=" + sourceIPAddValue + "+" + tsiValue may signal via the sourceIPAddValue and the tsiValue the source IP address and TSI that jointly uniquely identify a FLUTE session. An example string for the serviceLocation attribute may be:

```
 3gpp-sl,transport=broadcast,flute=198.152.39.10+4567 or the like.
```

An alternative string (of key=value pair format) ",fluteSDP=" + sdpURLValue may signal via the sdpURLValue URL that identifies one of the FLUTE sessions defined for the broadcast service. An example string for the serviceLocation attribute may be:

```
 3gpp-sl,transport=broadcast,fluteSDP= http://example.com/serviceX/service.sdp or the
 like. Other strings may be defined to describe transport sessions other than FLUTE
 sessions.
```

In still further related aspects, the string (of key=value pair format) ",transition=" + transValue may indicate that the URL is intended to support redirection technique where the transValue could be either UC-BC or BC-UC, for example. An example string for the serviceLocation attribute may be:

```
 3gpp-sl,transport=unicast,transition=UC-BC or the like.
```

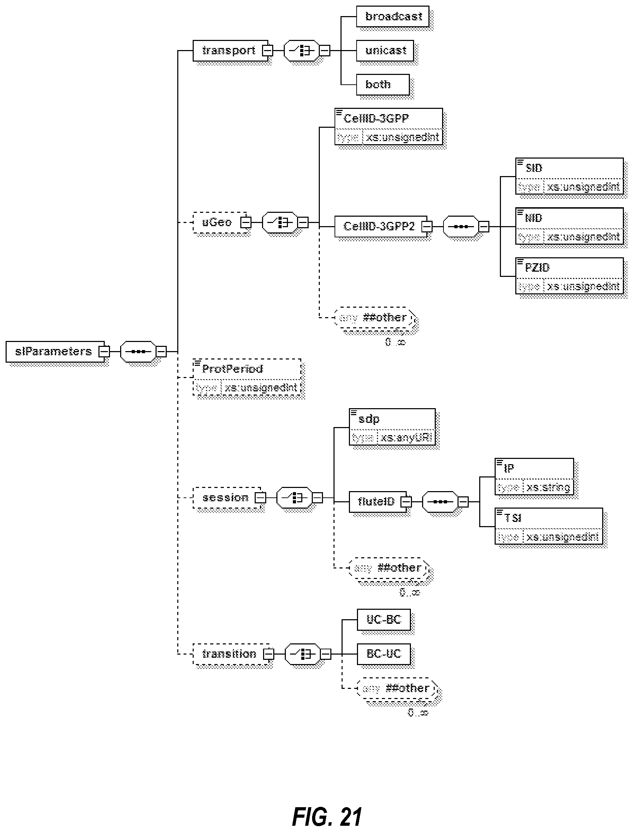

**CONVEYING PARAMETERS VIA XML STRINGS:** Yet another way to encode the different parameters described thus far for transport in the serviceLocation attribute of BaseURLs is via an XML file. The XML structure for these parameters could be captured on an XML schema as illustrated in the example of FIG. 21, which shows multiple broadcast transmissions for a single service.

In one embodiment, to signal the type of transport, the serviceLocation attribute may be as follows. For broadcast type, the serviceLocation attribute may be:

```
             <?xml version="1.0" encoding="UTF-8"?>
             <slParameters xmlns:xsi="http://www.w3.org/2001/XMLSchema-
 instance" xsi:noNamespaceSchemaLocation=".\slParameters.xsd">
                   <transport>
                         <broadcast/>
                   </transport>
             </slParameters>
```

For unicast type, the serviceLocation attribute may be:

```
             <?xml version="1.0" encoding="UTF-8"?>
             <slParameters xmlns:xsi="http://www.w3.org/2001/XMLSchema-
 instance" xsi:noNamespaceSchemaLocation=".\slParameters.xsd">
                   <transport>
                         <unicast/>
                   </transport>
             </slParameters>
```

In another embodiment, to signal geographical availability of a broadcast DASH service via unicast, the following may apply:

Using 3GPP cell IDs:

```
             <?xml version="1.0" encoding="UTF-8"?>
             <slParameters xmlns:xsi="http://www.w3.org/2001/XMLSchema-
 instance" xsi:noNamespaceSchemaLocation=".\slParameters.xsd">
                   <transport>
                         <unicast/>
                   </transport>
                   <uGeo>
                         <CellID-3GPP> 345690</CellID-3GPP>
                   </uGeo>
             </slParameters>
```

Using 3GPP2 cell ID:

```
             <?xml version="1.0" encoding="UTF-8"?>
             <slParameters xmlns:xsi="http://www.w3.org/2001/XMLSchema-
 instance" xsi:noNamespaceSchemaLocation=".\slParameters.xsd">
                   <transport>
                         <unicast/>
                   </transport>
                   <uGeo>
                         <CellID-3GPP2>
                               <SID></ SID>
                               <NID></ NID>
                               <PZID></ PZID>
                         </CellID-3GPP2>
                   </uGeo>
             </slParameters>
```

In yet another embodiment, to signal the protection period, the following may apply:

```
             <?xml version="1.0" encoding="UTF-8"?>
             <slParameters xmlns:xsi="http://www.w3.org/2001/XMLSchema-
 instance" xsi:noNamespaceSchemaLocation=".\slParameters.xsd">
                   <transport>
                         <broadcast/>
                   </transport>
                   <ProtPeriod>50</ProtPeriod>
             </slParameters>
```

In still another embodiment, to signal the appropriate broadcast transport session for a representation, the following may apply:

```
             <?xml version="1.0" encoding="UTF-8"?>
             <slParameters xmlns:xsi="http://www.w3.org/2001/XMLSchema-
 instance" xsi:noNamespaceSchemaLocation=".\slParameters.xsd">
                   <transport>
                         <broadcast/>
                   </transport>
                   <session>
                         <sdp>http://example.com/serviceX/service.sdp</sdp>
                   </session>
             </slParameters>
```

In yet another embodiment, to signal the URL used for on-demand DASH service, the following may apply:

```
             <?xml version="1.0" encoding="UTF-8"?>
             <slParameters xmlns:xsi="http://www.w3.org/2001/XMLSchema-
 instance" xsi:noNamespaceSchemaLocation=".\slParameters.xsd">
                   <transport>
                         <unicast/>
                   </transport>
                   <transition>
                         <UC-BC/>
                   </transition>
             </slParameters>
```

**OPTIONS FOR DECLARING BROADCAST TRANSPORT MODE AND/OR BROADCAST AVAILABILITY ADJUSTMENT:** In accordance with aspects of the subject of this disclosure, there are provided other options for using the MPD to declare the transport mode of the DASH segments, as well as the availability adjustment in the availability of the media segments delivered via broadcast, relative to unicast delivery of those same media segments. One approach, described above, involves using the serviceLocation attribute for carrying such metadata regarding the transport mode and broadcast availability adjustment information. Another approach, described above, involves using the Session Description of the MBMS service announcement information to provide the transport mode and delivery availability adjustment information, via an SDP file or the like.

In the alternative, or in addition, the transport mode and broadcast availability adjustment information may be signaled within a new MPD element named TransportDescription or the like. For example, TransportDescription may represent a type of generic descriptor element (e.g., as defined by the MPEG DASH (ISO/IEC 23009-1) or 3GP-DASH (3GPP TS 26.247) standard), and serves as a container for transmission and access-related information for the Representations described in the MPD. Examples of such transmission and access information may include: i) a transmission topology (unicast, broadcast, or both); ii) a specific type of broadcast technology (e.g., cellular MBMS over GERAN, UTRAN, or LTE), terrestrial broadcast TV system (e.g., ATSC, ISDB-T, T-DMB, CMMB, or DVB-T), or satellite TV broadcast technologies (e.g., DVB-S or S-DMB); iii) reference to service announcement/discovery related information specific to the access technology; and iv) a broadcast delivery specific availability adjustment of Segment availability relative to the segment availability of unicast delivery. The broadcast specific availability adjustment may augment the MPD@availabilityStartTime by providing the time delay value to be added to the unicast segment availability time. The resulting value (unicast segment availability time + broadcast delay value) represents the broadcast segment availability time.

In the alternative, or in addition, the transport mode and broadcast availability adjustment information may be signaled by defining a new extension parameter under the BaseURL element in the MPD. The new extension parameter may include a child element or attribute broadcastDelivery that indicates MBMS delivery and additionally announces the broadcast availability adjustment. The new extension parameter may appear under the BaseURL child element of the Representation element or the like. This approach would provide an indication of whether individual Representations of the Media Presentation will be available for broadcast delivery, and would also provide an indication of any different latencies.

It is noted that the TransportDescription may be defined to solely provide an entry point to service announcement information. The availability adjustment parameter may be moved into the BaseURL element of the MPD. In related aspects, when the TransportDescription element is used to express access-specific parameters, indicated in the case of broadcast transport, the transmission and access related information may explicitly identify the technology (e.g., cellular, terrestrial TV, satellite TV, or the like). The broadcast technology may be identified by extending the BaseURL element for carrying access-specific parameters or the like. In further related aspects, the Transport descriptor may be placed at different hierarchical levels of the MPD, such as, for example, at the top MPD element level or under child elements of the MPD (e.g., Period, AdaptationSet, Representation, etc.). It is noted that the TransportDescription element may be a peer element of the BaseURL, or may be a peer element of the SegmentBase.

In related aspects, the Transport descriptor (i.e. the TransportDescription element) may be able to address individual Segments declared in the MPD, as each segment may be delivered over a different network. In further related aspects, the Transport descriptor may be defined at the Representation level. For example, the Transport descriptor may be added to the following elements: (a) the BaseURL element, which can then be used flexibly, and/or (b) the SegmentBase element (e.g., when no BaseURL is present), such that the Transport descriptor can be added on the Period, the AdaptationSet, and/or the Representation levels.

In related aspects, the Transport descriptor access scheme, as represented by an attribute schemeIdUri of the Transport descriptor, may be constructed such that the DASH client, device middleware, or other UE function can interpret this feature to determine whether the network stack supports this transport scheme. The associated value in a Transport descriptor may provides a unique entry point to the transport to the service announcement. For example, the associated Value may be a serviceID or a URL to a service announcement document, etc.

In related aspects, in the case of MBMS, the Transport descriptor value may be a URL to the user service bundle document/fragment that also includes the serviceID (e.g., coded as a fragment in the URL). The Transport descriptor value may include specific information on the FLUTE session to be joined. In the alternative, or in addition, the URL to the service and access discovery information may also be made available on a web-page through HTTP or the like. In this case, a content type may be defined that identifies the document linked by the URL as a user service bundle description document for the broadcast/multicast link.

**SIGNALING BROADCAST AND/OR UNICAST AVAILABILITY OF REPRESENTATIONS:** In accordance with one or more aspects of the embodiments described herein, there is provided a technique for signaling the availability of broadcast and/or unicast availability of representations of media data segments in a broadcast wireless system. With reference to FIG. 10B, there is shown an example USD including system information for an eMBMS service. The USD has been expanded to describe the availability of the representations via broadcast, unicast, or both.

As FIG. 10B illustrates, the presence of an updated media-Presentation-Description-2 element indicates that the service the USD describes is a DASH eMBMS service where the mpdURI element provides a link to identify the MPD which is associated with the DASH service.

The updated media-Presentation-Description-2 element also provides list of broadcast-Representation and unicast-Representation elements that identify the unicast and broadcast representations. A representation identified in both lists is available via unicast and broadcast.

A representation in either list may be identified: by the period, via the periodId attribute; by the adaptation set, via the adaptationSetId attribute; and/or by the representation, via the representationId attribute as references to respective values identified in the MPD. Broadcast representations may also be associated with serviceArea information which enables broadcast component to determine which representation is available in a given broadcast area.

Since broadcast services may also include multiple transport streams, a broadcast DASH service may have different representations being carried via separate transport streams. This could be done to provide different resolutions targeting different device capabilities, or different languages targeting different user preferences.

In an example broadcast client behavior, based on the broadcast and/or unicast availability of DASH representations signaled in the USD for an eMBMS DASH service, a broadcast eMBMS client may be able to: know when the device is in or out of broadcast coverage; and/or know which of the DASH representations in the MPD is available via broadcast service and which are available via unicast per the system information (e.g., the USD in eMBMS) as FIG. 10B shows. In related aspects, depending on the broadcast coverage state, the broadcast client may: signal the client to select one of the available broadcast representations once the device is in broadcast coverage; and/or signal the DASH client to select one of the available unicast representations once the device is not in broadcast coverage. In further related aspects, depending on the DASH client selection of broadcast representation, the broadcast client may activate reception of the FLUTE session that carries the selected representation.

The attribute availabilityTimeAdjustment, if present, specifies the adjustment for broadcast reception of the Representation relative to the Segment availability start time declared in the MPD fragment (i.e., MPD@availabilityStartTime), and which could be either a positive or negative value. A positive (negative) value implies that the availability time of Segments of the Representation are later (earlier) than that of any Representation, if applicable, of the Media Presentation delivered via unicast. The serviceArea and sessionDescription elements, if present, denote the service area(s) over which the Representation is available, and the FLUTE session carrying that Representaton, respectively. The unicastRepresentation element, if present, identifies each Representation that is offered over unicast for fall-back delivery. A unicast-delivered Representation may be the same Representation that is also delivered over the MBMS bearer, or it may be a Representation that is only delivered over the unicast bearer.

In view of various systems shown and described herein, methodologies that may be implemented in accordance with the disclosed subject matter, will be better appreciated with reference to various flow charts. While, for purposes of simplicity of explanation, methodologies are shown and described as a series of acts/blocks, it is to be understood and appreciated that the claimed subject matter is not limited by the number or order of blocks, as some blocks may occur in different orders and/or at substantially the same time with other blocks from what is depicted and described herein. Moreover, not all illustrated blocks may be required to implement methodologies described herein. It is to be appreciated that functionality associated with blocks may be implemented by software, hardware, a combination thereof or any other suitable means (e.g., device, system, process, or component). Additionally, it should be further appreciated that methodologies disclosed throughout this specification are capable of being stored on an article of manufacture to facilitate transporting and transferring such methodologies to various devices. Those skilled in the art will understand and appreciate that a methodology could alternatively be represented as a series of interrelated states or events, such as in a state diagram.

In accordance with one or more aspects of the embodiments described herein, with reference to FIG. 22A, there is shown a methodology 2200, operable by a mobile entity (e.g., a UE or the like). The method 2200 may involve, at 2210, receiving a MPD, the MPD comprising parameters for reception of data segments for multiple representations of content via broadcast transmission and unicast transmission (e.g., in response to activation of a file delivery session). It is noted that in the broadcast case, the data may reside locally on the UE's HTTP cache, whereas in the unicast case the data may reside in a HTTP server or "in the cloud". The method 2200 may involve, at 2220, determining whether the broadcast transmission or the unicast transmission is appropriate for reception of the data segments. The method 2200 may involve, at 2230, selecting a given representation from among the multiple representations of the content based on a criteria of the mobile entity. The method 2200 may involve, at 2240, receiving the data segments for the given representation based at least in part on the parameters for the determined one of the broadcast transmission and the unicast transmission.

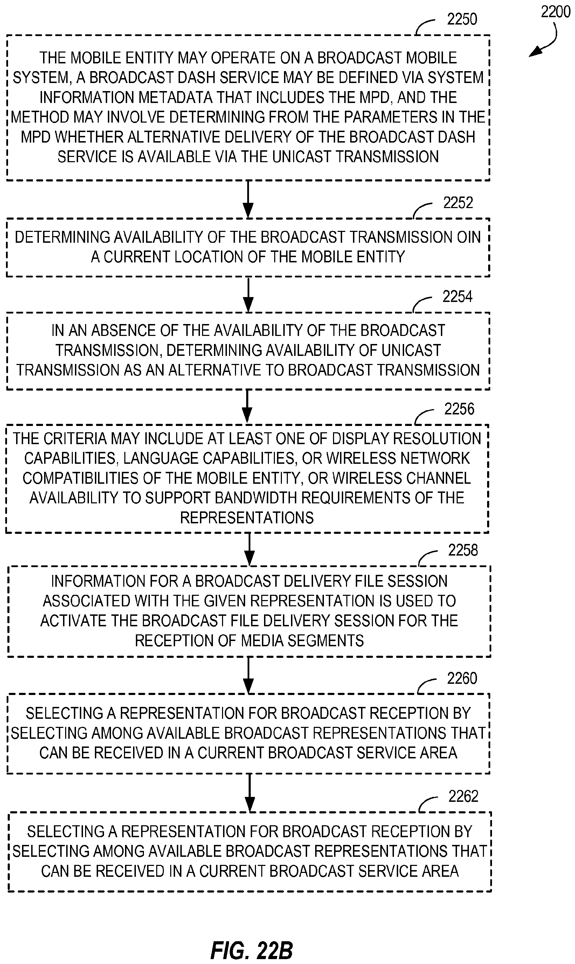

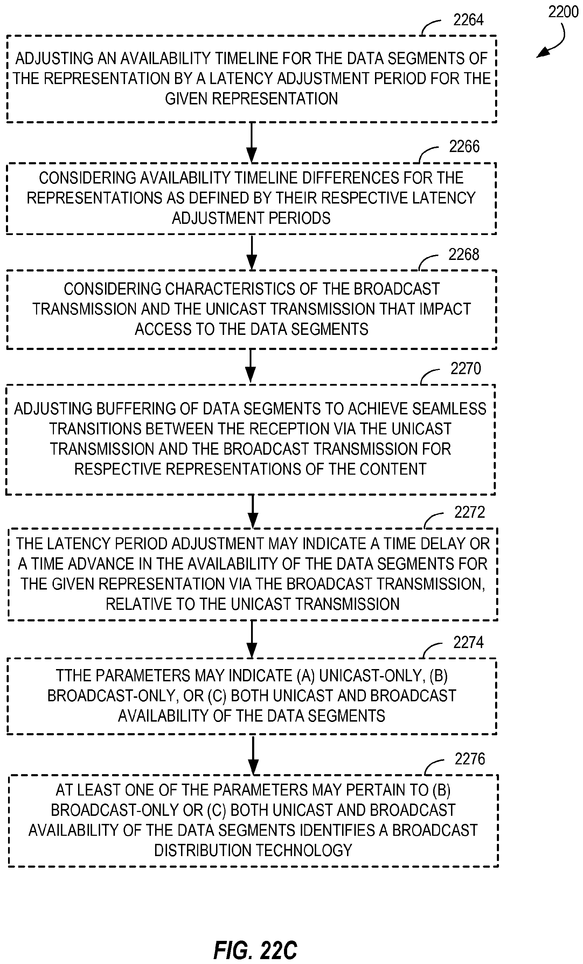

With reference to FIGS. 22B-D, there are shown further operations or aspects of the method 2200 that are optional and may be performed by a mobile entity or the like. If the method 2200 includes at least one block of FIGS. 22B or 22C, then the method 2200 may terminate after the at least one block, without necessarily having to include any subsequent downstream block(s) that may be illustrated. It is further noted that the reference numbers of the blocks do not imply a particular order in which the blocks may be performed according to the method 2200. For example, the mobile entity may operate on a broadcast mobile system, a broadcast DASH service may be defined via system information metadata that includes the MPD, and the method may involve determining from the parameters in the MPD whether alternative delivery of the broadcast DASH service is available via the unicast transmission (block 2250).

The method 2200 may involve determining availability of the broadcast transmission in a current location of the mobile entity (block 2252), and in an absence of the availability of the broadcast transmission, determining availability of the unicast transmission as an alternative to the broadcast transmission (block 2254).

The criteria may include at least one of display resolution capabilities, language capabilities, wireless network compatibilities of the mobile entity, or wireless channel availability to support bandwidth requirements of the representations (block 2256). Information for a broadcast file delivery session associated with the given representation is used to activate the broadcast file delivery session for the reception of media segments (block 2258).

The method 2200 may involve selecting a representation for broadcast reception by selecting among available broadcast representations that can be received in a current broadcast service area (block 2260).

The method 2200 may involve selecting a representation for unicast reception by selecting among available unicast representations for alternative delivery that can be received in the current unicast service area (block 2262).

With reference to FIG. 22C, receiving (block 2240) may involve adjusting an availability timeline for the data segments of the representation by a latency adjustment period for the given representation (block 2264).

Receiving (block 2240) may involve: considering availability timeline differences for the representations as defined by their respective latency adjustment periods (block 2266); considering characteristics of the broadcast transmission and the unicast transmission that impact access to the data segments (block 2268); and adjusting buffering of data segments to achieve seamless transitions between the reception via the unicast transmission and the broadcast transmission for respective representations of the content (block 2270).

The latency period adjustment may indicate a time delay or a time advance in the availability of the data segments for the given representation via the broadcast transmission, relative to the unicast transmission (block 2272). For example, the parameters may indicate an availability adjustment for broadcast delivery of the data segments, relative to unicast delivery of the data segments. For example, the parameters may indicate an expected time delay in the availability of broadcast-delivered data segments, relative to their availability via unicast delivery. In the alternative, the parameters may indicate an expected time advance in the availability of broadcast-delivered data segments, relative to their availability via unicast delivery.

The parameters may indicate (a) unicast-only, (b) broadcast-only, or (c) both unicast and broadcast availability of the data segments (block 2274). At least one of the parameters may pertain to (b) broadcast-only or (c) both unicast and broadcast availability of the data segments identifies a broadcast distribution technology (block 2276). For example, the at least one broadcast distribution technology may correspond to an IP-based broadcast system, such as, for example, a) cellular broadcast technology, b) terrestrial broadcast TV system, or c) satellite TV broadcast technology.

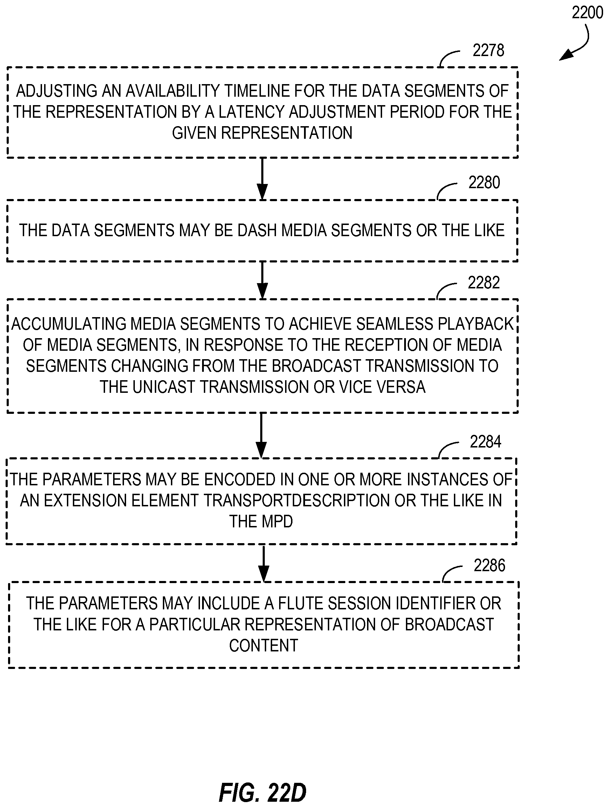

With reference to FIG. 22D, the parameters include information regarding availability of a broadcast representation in certain identified broadcast service areas (block 2278).

The data segments may be DASH media segments or the like (block 2280), and the method 2200 may further involve accumulating the media segments to achieve seamless playback of the media segments, in response to the reception of the media segments changing from the broadcast transmission to the unicast transmission or vice versa (block 2282). The parameters may be encoded in one or more instances of an extension element TransportDescription or the like in the MPD (block 2284). The parameters may include a FLUTE session identifier or the like for a particular representation of broadcast content (block 2286).

In related aspects, determining (block 2220) may involve determining that the unicast retrieval is appropriate for the reception of the data segments. The parameters may indicate geographical availability of the data segments for the unicast retrieval. In further related aspects, the parameters may comprise information for directing unicast DASH accesses to an on-demand broadcast version of content via a serviceLocation attribute in the MPD for the content.

In yet further related aspects, parameters may be encoded in a BaseURL of the MPD. The parameters may comprise a URN under a registered NID. The parameters may comprise a URN namespace specific string (NSS) that includes a colon-separated list of key=value pairs carried as strings in a serviceLocation attribute of the BaseURL. The parameters may relate to DASH representations that provide alternatives for a given data stream.

In still further related aspects, the parameters may be encoded in one or more instances of an extension element TransportDescription under the MPD. The extension element TransportDescription under the MPD may reside within one or more of the following different hierarchical levels of the MPD data structure: the MPD element, Period element, AdaptationSet element and Representation element. The TransportDescription may be a type of generic descriptor element, and may contain transmission and access related information for the Representations described in the MPD. The transmission and access related information carried in each instance of the TransportDescription may indicate at least one transmission topology: a) unicast, b) broadcast, or c) both unicast and broadcast.

If the transmission topology is indicated as broadcast or both broadcast and unicast, the transmission and access related information may indicate one of a specific type of a) cellular broadcast technology, b) terrestrial broadcast TV system, or c) satellite TV broadcast technology. The transmission and access related information may indicate entry point information for accessing service announcement/discovery information for the broadcast technology. In addition to entry point information for accessing service announcement/discovery information for the broadcast technology, the transmission and access related information may indicate an expected availability adjustment of broadcast-delivered data segments, relative to their availability via unicast delivery. The availability time via unicast delivery of data segments may be represented by, or may be derived from, a value of MPD@availabilityStartTime.

In related aspects, the parameters may be encoded in one or more extension parameters under at least one instance of a BaseURL element in the MPD. The parameters in each of the one or more instances of the BaseURL element may indicate unicast or broadcast transport mode. If the transport mode is indicated as broadcast, the associated parameters may allow explicit identification of one broadcast distribution technology of a specific type of a) cellular broadcast technology, b) terrestrial broadcast TV system, or c) satellite TV broadcast technology. The parameters may indicate an expected availability adjustment of broadcast-delivered data segments, relative to their availability via unicast delivery. The parameters may indicate whether individual representations of a media presentation will be available for broadcast delivery. If the transport mode is indicated as unicast, the associated parameters may allow explicit identification of one unicast access network or Content Delivery Network (CDN) type. The parameters may indicate an expected availability adjustment of data segments for retrieval on this unicast access network or CDN, relative to their availability via unicast delivery.

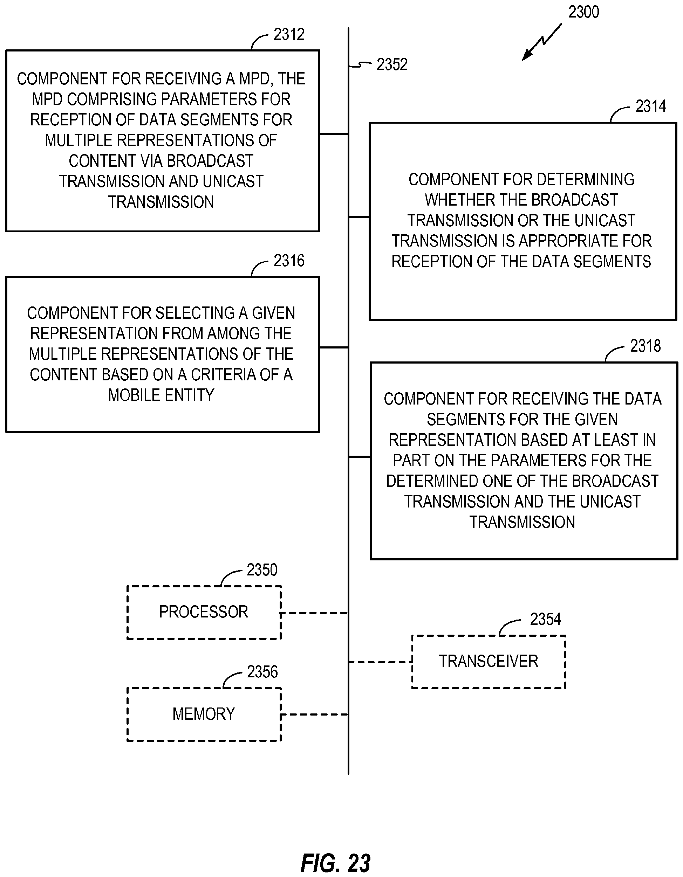

In accordance with one or more aspects of the embodiments described herein, there are provided devices and apparatuses for performing the methodologies described above with reference to FIGS. 22A-D. With reference to FIG. 23, there is provided an exemplary apparatus 2300 that may be configured as a mobile entity, or as a processor or similar device/component for use within. The apparatus 2300 may include functional blocks that can represent functions implemented by a processor, software, or combination thereof (e.g., firmware). For example, apparatus 2300 may include an electrical component or module 2312 for receiving a MPD, the MPD comprising parameters for reception of data segments for multiple representations of content via broadcast transmission and unicast transmission. The apparatus 2300 may include a component 2314 for determining whether the broadcast transmission or the unicast transmission is appropriate for reception of the data segments. The apparatus 2300 may include a component 2316 for selecting a given representation from among the multiple representations of the content based on a criteria of a mobile entity. The apparatus 2300 may include a component 2318 for receiving the data segments for the given representation based at least in part on the parameters for the determined one of the broadcast transmission and the unicast transmission.

In related aspects, the apparatus 2300 may optionally include a processor/controller component 2350 having at least one processor, in the case of the apparatus 2300 configured as a mobile entity rather than as a processor. The processor 2350, in such case, may be in operative communication with the component(s) 2312-2318 via a bus 2352 or the like. The processor 2350 may effect initiation and scheduling of the processes or functions performed by the component(s) 2312-2318.

In further related aspects, the apparatus 2300 may include a radio frequency (RF) transceiver component 2354. A stand alone receiver and/or stand alone transmitter may be used in lieu of or in conjunction with the transceiver 2354. The apparatus 2300 may optionally include a component for storing information, such as, for example, a memory device/component 2356. The computer readable medium or the memory component 2356 may be operatively coupled to the other components of the apparatus 2300 via the bus 2352 or the like. The memory component 2356 may be adapted to store computer readable instructions and data for effecting the processes and behavior of the component(s) 2312-2318, and subcomponents thereof, or the processor 2350, or the methods disclosed above with reference to FIGS. 22A-D. The memory component 2356 may retain instructions for executing functions associated with the component(s) 2312-2318. While shown as being external to the memory 2356, it is to be understood that the component(s) 2312-2318 may exist within the memory 2356. It is further noted that the component(s) in FIG. 23 may comprise processors, electronic devices, hardware devices, electronic sub-components, logical circuits, memories, software codes, firmware codes, etc., or any combination thereof.

In accordance with one or more aspects of the embodiments described herein, FIG. 24 shows another example methodology 2400 operable by a mobile entity or the like. The method 2400 may involve, at 2410, receiving system information that includes: (a) a DASH MPD; and (b) parameters for reception of data segments for multiple representations of content via broadcast transmission and unicast transmission. The method 2400 may involve, at 2415, determining whether the broadcast transmission or the unicast transmission is appropriate for reception of the data segments. The method 2400 may involve, at 2420, selecting a given representation from among the multiple representations of the content based on the parameters and a criteria of the mobile entity. The method 2400 may involve, at 2430, receiving data segments for the given representation.

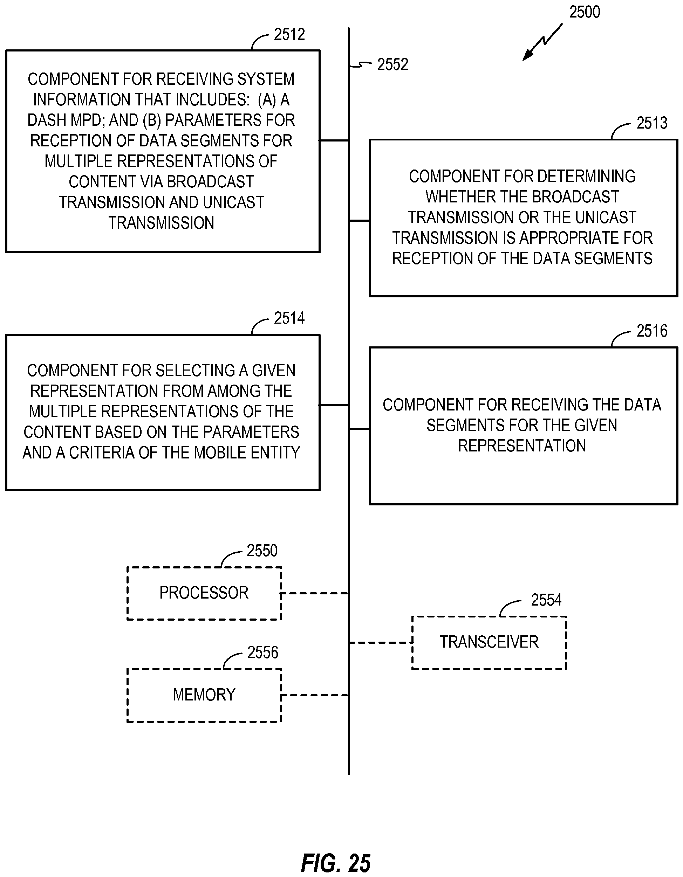

In accordance with one or more aspects of the embodiments described herein, FIG. 25 shows a design of an apparatus 2500 (e.g., a mobile entity or component(s) thereof) for performing the method 2400 described above with reference to FIG. 24. For example, apparatus 2500 may include an electrical component or module 2512 for receiving system information that includes: (a) a DASH MPD; and (b) parameters for reception of data segments for multiple representations of content via broadcast transmission and unicast transmission. The apparatus 2500 may include a component 2513 for determining whether the broadcast transmission or the unicast transmission is appropriate for reception of the data segments. The apparatus 2500 may include a component 2514 for selecting a given representation from among the multiple representations of the content based on the parameters and a criteria of the mobile entity. The apparatus 2500 may include a component 2516 for receiving data segments for the given representation. For the sake of conciseness, the rest of the details regarding the apparatus 2500 are not further elaborated on; however, it is to be understood that many of the features and aspects of the apparatus 2500 are substantially similar to those described above with respect to the apparatus 2300 of FIG. 23.

In accordance with one or more aspects of the embodiments described herein, with reference to FIG. 26, there is shown a methodology 2600, operable by a network entity (e.g., an eNB or the like). The method 2600 may involve, at 2610, sending a MPD, the MPD comprising parameters for reception of data segments for multiple representations of content via broadcast transmission and unicast transmission. The method 2600 may involve, at 2620, receiving a request for a given representation of the content. The method 2600 may involve, at 2630, sending the data segments for the given representation via the broadcast transmission or the unicast transmission based at least in part on the parameters. The method may optionally involve signaling which representations of a service are available for the broadcast transmission or the unicast transmission (block 2640). For example, sending the data segments (block 2630) may involve sending the data segments for the given representation via the unicast transmission and in parallel sending the data segments for at least one different representation via the broadcast transmission (block 2650).

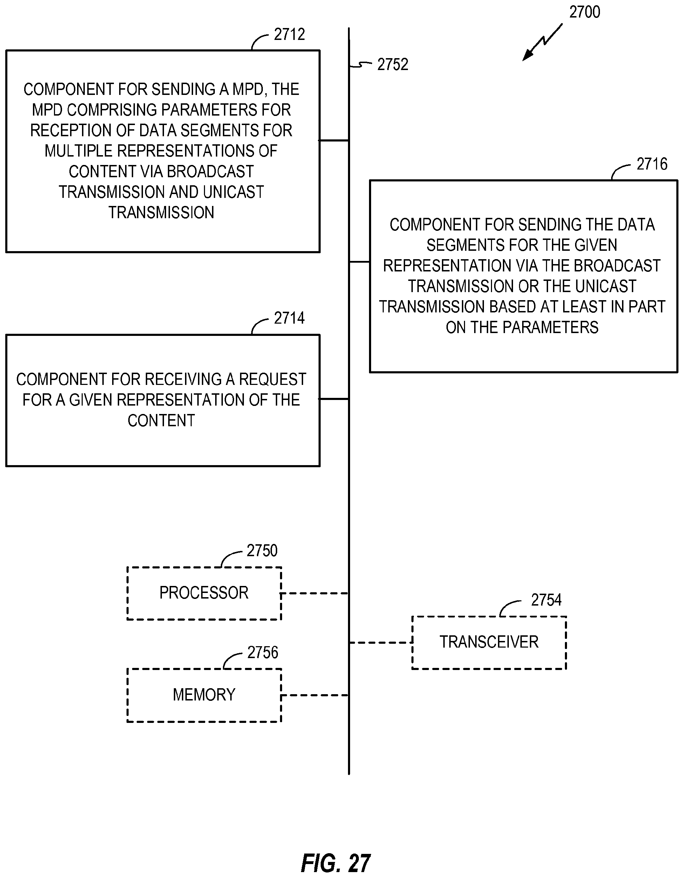

In accordance with one or more aspects of the embodiments described herein, FIG. 27 shows a design of an apparatus 2700 (e.g., a network entity or component(s) thereof) for performing the method 2600 described above with reference to FIG. 26. For example, apparatus 2700 may include an electrical component or module 2712 for sending a MPD, the MPD comprising parameters for reception of data segments for multiple representations of content via broadcast transmission and unicast transmission. The apparatus 2700 may include a component 2714 for receiving a request for a given representation of the content. The apparatus 2700 may include a component 2716 for sending the data segments for the given representation via the broadcast transmission or the unicast transmission based at least in part on the parameters. For the sake of conciseness, the rest of the details regarding apparatus 2700 are not further elaborated on; however, it is to be understood that many of the features and aspects of the apparatus 2700 are similar to those described above with respect to apparatus 2300 of FIG. 23. It is noted, however, that the apparatus 2700 may be a network entity, such as an eNB or the like. Accordingly, the apparatus may include network interface components (e.g., network interface cards or controllers), as well as other components typically found in a base station used in a wireless communication system.

It is noted that the network side describes the MPD and the parameters to the mobile device/entity to select between the broadcast and/or unicast representations. The network sends the broadcast representation(s) and makes the unicast representation(s) available for the mobile device to fetch segments. In related aspects, the apparatus 2700 may further involve in response to the mobile entity selecting the unicast mode for reception of the media data segments, sending a mobile-entity selected representation of the media data segments via a unicast HTTP or the like.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and process steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or process described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can include RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or non-transitory wireless technologies, then the coaxial cable, fiber optic cable, twisted pair, DSL, or the non-transitory wireless technologies are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations. Thus, the disclosure is not intended to be limited to the examples and designs described herein but is to be accorded the widest scope consistent with the principles and novel features disclosed herein. The scope of the invention is defined by the appended claims, only.

## Claims

1. A method operable by a mobile entity in a wireless system, the method comprising:
receiving system information that includes a Dynamic Adaptive Streaming over HTTP, DASH, media presentation description, MPD, and parameters outside of the MPD for reception of data segments for multiple representations of content via at least one of broadcast transmission, unicast transmission, or a combination thereof;
determining an appropriate transport protocol for the reception of the data segments from at least one of the broadcast transmission or the unicast transmission based on the parameters ;
selecting one representation among the multiple representations of the content based on the parameters and a criteria of the mobile entity; and
receiving data segments for the selected one representation according to the appropriate transport protocol.

2. The method of claim 1, wherein determining the appropriate transport protocol further comprises;
determining an availability of the broadcast transmission in a current location of the mobile entity; and
determining an availability of the unicast transmission as an alternative to the broadcast transmission when the broadcast transmission is not available.

3. An apparatus, comprising:
means for receiving system information that includes a Dynamic Adaptive Streaming over HTTP, DASH, media presentation description, MPD, and parameters outside of the MPD for reception of data segments for multiple representations of content via broadcast transmission, or unicast transmission, or a combination thereof;
means for determining an appropriate transport protocol for reception of the data segments from at least one of the broadcast transmission or the unicast transmission based on the parameters ;
means for selecting one representation from the multiple representations of the content based on the parameters and a criteria of the mobile entity; and
means for receiving data segments for the selected one representation according to the appropriate transport protocol.

4. A computer program product, comprising:
a non-transitory computer-readable medium comprising code for causing a computer to:
receive system information that includes a Dynamic Adaptive Streaming over HTTP, DASH, media presentation description, MPD, and parameters outside of the MPD for reception of data segments for multiple representations of content via at least one of broadcast transmission, unicast transmission, or a combination thereof;
determine an appropriate transport protocol for the reception of the data segments from at least one of the broadcast transmission or the unicast transmission based on the parameters ;
select one representation from the multiple representations of the content based on the parameters and a criteria of the mobile entity; and
receive data segments for the selected one representation according to the appropriate transport protocol.

## Patentansprüche

1. Ein Verfahren, das durch eine mobile Einheit in einem drahtlosen System ausgeführt werden kann, wobei das Verfahren aufweist:
Empfangen von Systeminformationen, die eine DASH (Dynamic Adaptive Streaming over HTTP)-Medienwiedergabebeschreibung (Media Presentation Description bzw. MPD) und Parameter außerhalb der MPD für den Empfang von Datensegmenten für mehrfache Wiedergaben eines Inhalts enthalten, über eine Broadcast- und/oder Unicastsendung,
Bestimmen eines geeigneten Transportprotokolls für den Empfang der Datensegmente von der Broadcast- und/oder Unicastsendung basierend auf den Parametern,
Auswählen einer Wiedergabe aus den mehreren Wiedergaben des Inhalts basierend auf den Parametern und einem Kriterium der mobilen Einheit, und
Empfangen von Datensegmenten für die ausgewählte eine Wiedergabe gemäß dem geeigneten Transportprotokoll.

2. Verfahren nach Anspruch 1, wobei das Bestimmen des geeigneten Transportprotokolls weiterhin aufweist:
Bestimmen der Verfügbarkeit der Broadcastsendung an einer aktuellen Position der mobilen Einheit, und
Bestimmen der Verfügbarkeit der Unicastsendung als einer Alternative zu der Broadcastsendung, wenn die Broadcastsendung nicht verfügbar ist.

3. Eine Vorrichtung, aufweisend:
Mittel zum Empfangen von Systeminformationen, die eine DASH (Dynamic Adaptive Streaming over HTTP)-Medienwiedergabebeschreibung (Media Presentation Description bzw. MPD) und Parameter außerhalb der MPD für den Empfang von Datensegmenten für mehrfache Wiedergaben eines Inhalts enthalten, über eine Broadcast- und/oder Unicastsendung,
Mittel zum Bestimmen eines geeigneten Transportprotokolls für den Empfang der Datensegmente von der Broadcast- und/oder Unicastsendung basierend auf den Parametern,
Mittel zum Auswählen einer Wiedergabe aus den mehreren Wiedergaben des Inhalts basierend auf den Parametern und einem Kriterium der mobilen Einheit, und
Mittel zum Empfangen von Datensegmenten für die ausgewählte eine Wiedergabe gemäß dem geeigneten Transportprotokoll.

4. Ein Computerprogrammprodukt, aufweisend:
ein nicht-transitorisches, computerlesbares Medium mit einem Code, der einen Computer veranlasst zum:
Empfangen von Systeminformationen, die eine DASH (Dynamic Adaptive Streaming over HTTP)-Medienwiedergabebeschreibung (Media Presentation Description bzw. MPD) und Parameter außerhalb der MPD für den Empfang von Datensegmenten für mehrfache Wiedergaben eines Inhalts enthalten, über eine Broadcast- und/oder Unicastsendung,
Bestimmen eines geeigneten Transportprotokolls für den Empfang der Datensegmente von der Broadcast- und/oder Unicastsendung basierend auf den Parametern,
Auswählen einer Wiedergabe aus den mehreren Wiedergaben des Inhalts basierend auf den Parametern und einem Kriterium der mobilen Einheit, und
Empfangen von Datensegmenten für die ausgewählte eine Wiedergabe gemäß dem geeigneten Transportprotokoll.

## Revendications

1. Procédé mis en oeuvre par une entité mobile dans un système sans fil, le procédé comprenant les étapes consistant à :
recevoir une information de système qui inclut une description de présentation multimédia, MPD, avec diffusion adaptative dynamique sur HTTP, DASH, et des paramètres hors de la MPD pour la réception de segments de données pour de multiples représentations d'un contenu par l'intermédiaire d'une transmission de diffusion générale et/ou d'une transmission de monodiffusion et/ou d'une combinaison correspondante ;
déterminer un protocole de transport approprié pour la réception des segments de données en provenance de la transmission de diffusion générale et/ou de la transmission de monodiffusion, sur la base des paramètres ;
sélectionner une représentation parmi les multiples représentations du contenu sur la base des paramètres et d'un critère de l'entité mobile ; et
recevoir des segments de données pour la représentation sélectionnée selon le protocole de transport approprié.

2. Procédé selon la revendication 1, dans lequel la détermination du protocole de transport approprié comprend en outre les étapes consistant à :
déterminer une disponibilité de la transmission de diffusion générale à un emplacement actuel de l'entité mobile ; et
déterminer une disponibilité de la transmission de monodiffusion en guise d'alternative à la transmission de diffusion générale quand la transmission de diffusion générale n'est pas disponible.

3. Appareil, comprenant :
un moyen permettant de recevoir une information de système qui inclut une description de présentation multimédia, MPD, avec diffusion adaptative dynamique sur HTTP, DASH, et des paramètres hors de la MPD pour la réception de segments de données pour de multiples représentations d'un contenu par l'intermédiaire d'une transmission de diffusion générale ou d'une transmission de monodiffusion ou d'une combinaison correspondante ;
un moyen permettant de déterminer un protocole de transport approprié pour la réception des segments de données en provenance de la transmission de diffusion générale et/ou de la transmission de monodiffusion, sur la base des paramètres ;
un moyen permettant de sélectionner une représentation parmi les multiples représentations du contenu sur la base des paramètres et d'un critère de l'entité mobile ; et
un moyen permettant de recevoir des segments de données pour la représentation sélectionnée selon le protocole de transport approprié.

4. Produit de programme informatique, comprenant :
un support non temporaire lisible par ordinateur, comprenant un code permettant d'amener un ordinateur à :
recevoir une information de système qui inclut une description de présentation multimédia, MPD, avec diffusion adaptative dynamique sur HTTP, DASH, et des paramètres hors de la MPD pour la réception de segments de données pour de multiples représentations d'un contenu par l'intermédiaire d'une transmission de diffusion générale et/ou d'une transmission de monodiffusion et/ou d'une combinaison correspondante ;
déterminer un protocole de transport approprié pour la réception des segments de données en provenance de la transmission de diffusion générale et/ou de la transmission de monodiffusion, sur la base des paramètres ;
sélectionner une représentation parmi les multiples représentations du contenu sur la base des paramètres et d'un critère de l'entité mobile ; et
recevoir des segments de données pour la représentation sélectionnée selon le protocole de transport approprié.
